(19) Europäisches Patentamt
European Patent Office
Office européen des brevets

(11) **EP 1 774 360 B1**

(12) **EUROPEAN PATENT SPECIFICATION**

(45) Date of publication and mention
of the grant of the patent:
**10.11.2010 Bulletin 2010/45**

(51) Int Cl.:
***G01S 7/04*** *(2006.01)*     ***G01S 13/89*** *(2006.01)*
***G09G 5/10*** *(2006.01)*

(21) Application number: **05763489.1**

(22) Date of filing: **12.07.2005**

(86) International application number:
**PCT/CA2005/001081**

(87) International publication number:
**WO 2006/005180 (19.01.2006 Gazette 2006/03)**

(54) **HIGH RESOLUTION IMAGES FROM REFLECTED WAVE ENERGY**

HOCHAUFLÖSENDE BILDER AUS REFLEXIONSWELLENENERGIE

IMAGES A HAUTE RESOLUTION ISSUES D'ENERGIE ONDULATOIRE REFLECHIE

(84) Designated Contracting States:
**AT BE BG CH CY CZ DE DK EE ES FI FR GB GR HU IE IS IT LI LT LU LV MC NL PL PT RO SE SI SK TR**

(30) Priority: **15.07.2004 US 891655**
**12.01.2005 US 34628**

(43) Date of publication of application:
**18.04.2007 Bulletin 2007/16**

(73) Proprietor: **Imagenex Technology Corp.**
**Port Coquitlam, BC V3C 4Z1 (CA)**

(72) Inventor: **WILSON, Douglas, James**
**Port Coquitlam, British Columbia V3B 4X2 (CA)**

(74) Representative: **Edlund, Fabian**
**Awapatent AB**
**P.O. Box 11394**
**404 28 Göteborg (SE)**

(56) References cited:
**WO-A1-97/04334     US-A- 4 237 737**

• KATKOVNIK V.: "A new concept of adaptive beamforming for moving sources and impulse noise environment" SIGNAL PROCESSING, ELSEVIER SCIENCE PUBLISHERS B.V. AMSTERDAM, NL, vol. 80, no. 9, 1 September 2000 (2000-09-01), pages 1863-1882, XP004215546 ISSN: 0165-1684

• THOMENIUS K E ED - LEVY M ET AL: "Evolution of ultrasound beamformers" ULTRASONICS SYMPOSIUM, 1996. PROCEEDINGS., 1996 IEEE SAN ANTONIO, TX, USA 3-6 NOV. 1996, IEEE, NEW YORK, NY, USA, vol. 2, 3 November 1996 (1996-11-03), pages 1615-1622, XP010217743 ISBN: 978-0-7803-3615-5

• LAU B K ET AL: "A dolph-chebyshev approach to the synthesis of array patterns for uniform circular arrays" CIRCUITS AND SYSTEMS, 2000. PROCEEDINGS. ISCAS 2000 GENEVA. THE 2000 I EEE INTERNATIONAL SYMPOSIUM ON MAY 28-31, 2000, PISCATAWAY, NJ, USA, IEEE, vol. 1, 1 May 2000 (2000-05-01), pages I_124-I_127, XP010503148 ISBN: 978-0-7803-5482-1

**Description**

**BACKGROUND OF THE INVENTION**

**1. Field of Invention**

This invention relates to imaging systems based on receiving reflected wave energy and more particularly to apparatus, methods, media and signals for producing high resolution images from reflected wave energy.

**2. Description of Related Art**

Imaging systems based on receiving reflected wave energy conventionally employ electromagnetic waves or acoustic waves to produce a reflected signal from a distant object. This reflected signal is interpreted and used to produce a display image. Various techniques may be used to interpret the reflected signal.

Many systems involve the use of a plurality of transducers arranged and configured in a transducer array. Each transducer produces a signal in response to reflected wave energy and each signal is processed to produce a focusing effect whereby the array appears to receive reflected wave energy in a steerable beam. Through suitable processing of the signals received from the transducers in the array this steerable beam can be swept through a plurality of angles to scan an area in which reflected wave energy is present.

Transducer arrays can be costly however, and require significant processing capability to adequately process signals from each transducer element to ultimately produce an image.

**SUMMARY OF THE INVENTION**

In accordance with one aspect of the invention, there is provided a process for producing signals for controlling a display to produce an image in an imaging system employing a plurality of transducers. The process involves producing first and second beam signals in response to delayed channel signals associated with respective transducers. The delayed channel signals represent real and imaginary components of time domain signals associated with respective transducers suitably delayed to focus a receive beam pattern of the transducers at a beam angle. Each of the first and second beam signals includes separate real and imaginary component representations. The process further involves combining the real and imaginary components of the first and second beam signals, to produce a composite beam signal, the composite beam signal including separate real and imaginary component representations. The process further involves performing a trigonometric expansion on normalized values of the real and imaginary component representations of the composite beam signal to produce a plurality of expanded values and producing illumination signals in response to the expanded values, for illuminating pixels on the display.

The process may involve receiving the delayed channel signals.

The process may involve producing the delayed channel signals.

The delayed channel signals may comprise producing the delayed channel signals in response to channel signals and delay signals associated with the respective transducers,

Each channel signal may represent a signal received at a corresponding transducer and include separate real and imaginary component representations and the delay signals may include separate cosine and sine delay components of a delay dependent on a desired beam angle at which the transducers are to be focused. Each of the delayed channel signals may include separate real and imaginary component representations.

The process may further include receiving the channel signals.

The process may further include producing the channel signals.

The channel signals may comprise producing frequency domain representations of respective time sampled representations of respective signals received at respective transducers and producing time domain representations of the respective signals in response to the frequency domain representations, the time domain representations comprising real and imaginary components.

The process may further include receiving the delay signals.

The process may further include receiving the channel signals and the delay signals may be received before the channel signals are received.

The process may further include producing the delay signals.

The process may further include receiving the channel signals and the delay signals may be produced before the channel signals are received.

Producing the delay signals may comprise producing the delay signals in response to transducer spacing, angular frequency of wave energy received at the transducers, desired beam angle and speed of the wave energy in an area of a medium for which the image is to be produced.

The process may further include producing a normalized composite beam signal comprising a plurality of normalized values, in response to the real and imaginary component representations of the composite beam signal and for each of the normalized values calculating a real part of the product of the first beam signal and the complex conjugate of the second beam signal.

Producing a normalized composite beam signal may comprise scaling the real part of a product of the first beam signal and a complex conjugate of the second beam signal, by a magnitude value.

The process may further include producing the magnitude value in response to the real and imaginary components of the first and second beam signals.

Performing a trigonometric expansion may comprise performing a power expansion on each of the normalized values.

Performing a trigonometric expansion may comprise performing a sum of Chebyshev polynomials on each of the normalized values.

The process may further include illuminating pixels on the display in response to the illumination signals.

The process may involve conducting the process above and/or variations thereof for each of a plurality of beam angles to produce a set of illumination signals for each the beam angle.

The process may further include defining the plurality of beam angles.

The process may further include mapping respective sets of illumination values to respective rays of pixels on the display, each the ray corresponding to a respective beam angle, the illumination signals being operable to cause pixels along a given ray to be illuminated in response to corresponding illumination values.

In accordance with another aspect of the invention, there is provided a computer readable medium encoded with instructions for directing a processor to execute the process above.

In accordance with another aspect of the invention, there is provided a computer readable signal encoded with instructions for directing a processor to execute the process above.

In accordance with another aspect of the invention, there is provided an apparatus for producing signals for controlling a display to produce an image in an imaging system employing a plurality of transducers. The apparatus includes provisions for producing first and second beam signals in response to delayed channel signals associated with transducers, the delayed channel signals representing real and imaginary components of time domain signals associated with respective transducers suitably delayed to focus a receive beam pattern of the transducers at a beam angle, each of the first and second beam signals including separate real and imaginary component representations. The apparatus further includes provisions for combining the real and imaginary components of the first and second beam signals, to produce a composite beam signal, the composite beam signal including separate real and imaginary component representations, provisions for performing a trigonometric expansion on normalized values of the real and imaginary component representations of the composite bean signal to produce a plurality of expanded values and provisions for producing illumination signals, in response to the expanded values, the illumination signals being operable to be received by the display for illuminating pixels on the display.

The apparatus may further include provisions for receiving the delayed channel signals.

The apparatus may further include provisions for producing the delayed channel signals.

The provisions for producing the delayed channel signals may comprise provisions for producing the delayed channel signals in response to channel signals and delay signals associated with the transducers,

Each channel signal may represent a signal received at a corresponding transducer and may include separate real and imaginary component representations and the delay signals may include separate cosine and sine delay components of a delay dependent on a desired beam angle at which the transducers are to be focused. Each of the delayed channel signals may include separate real and imaginary component representations.

The apparatus may further include provisions for receiving the channel signals.

The apparatus may further include provisions for producing the channel signals.

The provisions for producing the channel signals may comprise provisions for producing frequency domain representations of respective time sampled representations of respective signals received at respective transducers and provisions for producing time domain representations of the respective signals in response to the frequency domain representations. The time domain representations may comprise real and imaginary components.

The apparatus may further include provisions for receiving the delay signals.

The apparatus may further include provisions for receiving the channel signals and the delay signals may be received before the channel signals are received.

The apparatus may further include provisions for producing the delay signals.

The apparatus may further include provisions for receiving the channel signals and the delay signals may be produced before the channel signals are received.

The provisions for producing the delay signals may comprise provisions for producing the delay signals in response to transducer spacing, angular frequency of wave energy received at the transducers, desired beam angle and speed of the wave energy in an area of a medium for which the image is to be produced.

The apparatus may further include provisions for producing a normalized composite beam signal comprising a plurality of normalized values in response to the real and imaginary component representations of the composite beam signal and the provisions for producing a normalized composite beam signal may include provisions for, for each of the normalized values, calculating a real part of the product of the first beam signal and a complex conjugate of the second beam signal.

The provisions for normalizing may comprise provisions for scaling the real part of a product of the first beam signal and the complex conjugate of the second beam signal, by a magnitude value.

The apparatus may further include provisions for producing the magnitude value in response to the real and imaginary components of the first and second beam signals.

The provisions for performing a trigonometric expansion may comprise provisions for performing a power expansion on each of the normalized values.

The provisions for performing a trigonometric expansion may comprise provisions for performing a sum of Chebyshev polynomials on each of the normalized values.

The apparatus may further include provisions for illuminating pixels on the display in response to the expanded values.

The apparatus may further include provisions for causing the apparatus to produce a set of illumination signals for a plurality of the beam angles.

The apparatus may further include provisions for defining the plurality of beam angles.

The apparatus may further include provisions for mapping respective sets of illumination values to respective rays of pixels on the display, each of the rays corresponding to a respective beam angle, the illumination signals being operable to cause pixels along a given ray to be illuminated in response to corresponding illumination values.

In accordance with an example useful for understanding the invention, there is provided an apparatus for producing signals for controlling a display to produce an image in an imaging system employing a plurality of transducers. The apparatus includes memory for storing delayed channel signals associated with respective transducers, the delayed channel signals representing real and imaginary components of time domain signals associated with respective transducers suitably delayed to focus a receive beam pattern of the transducers at a beam angle. The apparatus further includes a processor in communication with the memory and operably configured to produce first and second beam signals in response to the delayed channel signals, each of the first and second beam signals including separate real and imaginary component representations. The processor is further operably configured to combine the real and imaginary components of the first and second beam signals, to produce a composite beam signal, the composite beam signal including separate real and imaginary component representations, perform a trigonometric expansion on normalized values of the real and imaginary component representations of the composite beam signal to produce a plurality of expanded values and produce illumination signals in response to the expanded values, for use by the display, for illuminating pixels on the display.

The apparatus may further include an input operably coupled to the processor for receiving the delayed channel signals.

The processor may be operably configured to produce the delayed channel signals.

The apparatus may further include memory for storing channel signals and delay signals associated with the respective transducers, each channel signal representing a signal received at a corresponding transducer and including separate real and imaginary component representations, and the delay signals including separate cosine and sine delay components of a delay dependent on a desired beam angle at which the transducers are to be focused, and the processor may be operably configured to produce the delayed channel signals in response to the channel signals and delay signals, each of the delayed channel signals including separate real and imaginary component representations.

The apparatus may further include an input coupled to the processor for receiving the channel signals.

The processor may be operably configured to produce the channel signals.

The apparatus may further include an input operably coupled to the processor to enable the processor to receive and store in the memory respective time sampled representations of respective signals received at respective transducers and the processor may be operably configured to produce the channel signals by producing frequency domain representations of respective time sampled representations of respective signals received at respective transducers and to produce time domain representations of the respective signals in response to the frequency domain representations, the time domain representations comprising real and imaginary components.

The apparatus may further include an input operably coupled to the processor to enable the processor to receive and store in the memory the delay signals.

The apparatus may further include an input operably coupled to the processor to enable the processor to receive the channel signals and wherein the delay signals may be received before the channel signals are received.

The processor may be operably configured to produce the delay signals.

The apparatus may further include an input operably coupled to the processor for receiving the channel signals and the processor may be operably configured to produce the delay signals before the channel signals are received.

The apparatus may further include memory for storing representations of transducer spacing, angular frequency of wave energy received at the transducers, desired beam angle and speed of the wave energy in an area of a medium for which the image is to be produced, and the processor may be operably configured to produce the delay signals in response to the representations of transducer spacing, angular frequency of wave energy received at the transducers, desired beam angle and speed of the wave energy in an area of a medium for which the image is to be produced.

The processor may be operably configured to produce a normalized composite beam signal comprising a plurality of normalized values in response to the real and imaginary component representations of the composite beam signal and for each of the normalized values, calculating a real part of a product of the first beam signal and a complex conjugate of the second beam signal.

The processor may be operably configured to scale the real part of the product of the first beam signal and the complex conjugate of the second beam signal, by a magnitude value.

The processor may be operably configured to produce the magnitude value in response to the real and imaginary components of the first and second beam signals.

The processor may be operably configured to perform the trigonometric expansion by performing a power expansion on each of the normalized values.

The processor may be operably configured to perform the trigonometric expansion by performing a sum of Chebyshev polynomials on each of the normalized values.

The processor may be operably configured to produce illumination signals operable to be received by an LCD display.

The processor may be operably configured to, for each of a plurality of beam angles, produce a set of illumination signals for each beam angle.

The processor may be operably configured to define the plurality of beam angles.

The processor may be operably configured to map respective sets of illumination values to respective rays of pixels on the display, each the ray corresponding to a respective beam angle, the illumination signals being operable to cause pixels along a given ray to be illuminated in response to corresponding illumination values.

Other aspects and features of the present invention will become apparent to those ordinarily skilled in the art upon review of the following description of specific embodiments of the invention in conjunction with the accompanying figures.

## BRIEF DESCRIPTION OF THE DRAWINGS

In drawings which illustrate embodiments of the invention,

Figure **1** is a schematic representation of an imaging system according to a first embodiment of the invention;

Figure **2** is a block diagram of a sonar transducer unit of the system shown in Figure **1;**

Figure **3** is a schematic representation depicting a phase delay in receiving a sound wave at transducer elements of the sonar transducer unit shown in Figure **2;**

Figure **4** is a table showing a relationship between depth range of interest, delta frequency, reference frequency, sample frequency, filter cutoff frequency respectively used by the transducer unit shown in Figure **2;**

Figure **5** is a graphical representation of a time-amplitude representation of a waveform produced by a transducer element of the sonar transducer unit of Figure **2,** showing sample-defined positions and pixel-defined positions;

Figure **6** is a block diagram of a processor circuit of a remotely located processor in the system shown in Figure **1;**

Figure **7** is a flow chart representing a process for producing signals for controlling a display to produce an image in an imaging system such as shown in Figure **1**;

Figure **8** is a high level flow chart representing code executed by a processor circuit shown in Figure **6,** to implement the process shown in Figure **7,** in the sonar imaging system shown in Figure **1;**

Figure 9                        is a flow chart representing blocks of code executed by the processor circuit shown in Figure 6, for pre-calculating phase delays for use in the process shown in Figure 8;

Figure 10A and 10B      are a flow chart representing blocks of code executed by the processor circuit shown in Figure 6, showing aspects of the process of Figure 8 in greater detail;

Figure 11                       is a schematic representation of a viewing area of the display shown in Figure 1, where pixels are addressed by polar coordinates; and

Figure 12                       is a graphical representation of a beam width, with and without a trigonometric expansion in the method shown in Figure 8.

## DETAILED DESCRIPTION

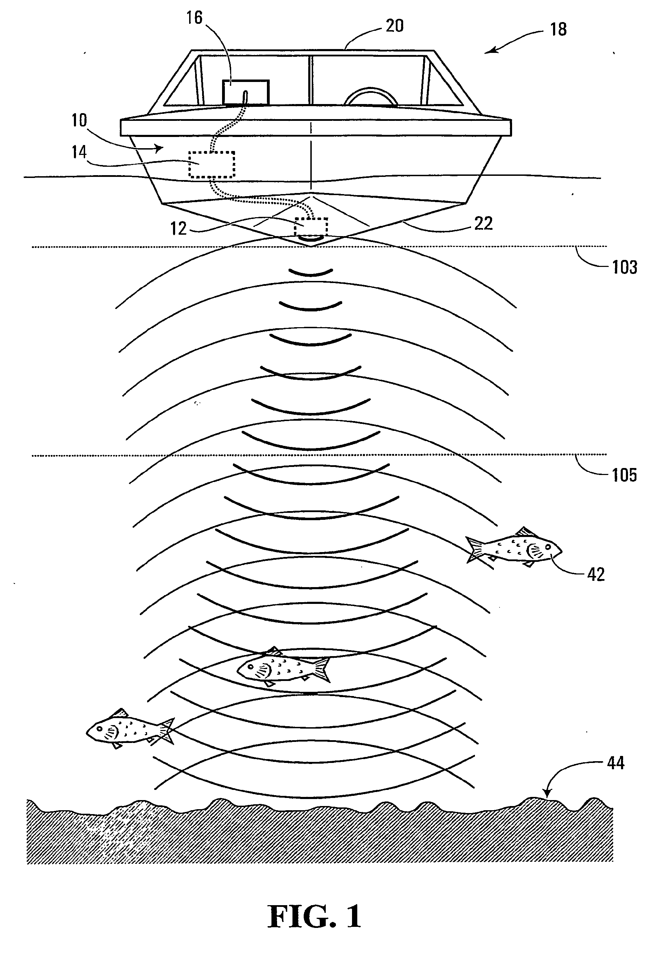

Referring to Figure 1, an imaging system according to a first embodiment of the invention is shown generally at 10. In this embodiment, the system includes a sonar imaging system having a sonar transducer unit 12 and a remotely located processor 14 having a display 16. It will be appreciated that while the embodiment described is a sonar imaging system, the processes described herein may alternatively be used with electromagnetic energy systems, or other acoustic energy systems.

In the system of the embodiment described, the remotely located processor 14 may be mounted on a boat 18 in a wheelhouse 20 thereof, for example and the sonar transducer unit 12 may be secured to the hull 22 of the boat 18 or may be towed behind, for example. In general, the processor 14 controls the sonar transducer unit 12 causing it to produce and receive sonar signals and send signals representing the sonar signals to the processor 14 for processing to produce a display image on the display 16, indicating underwater elements such as fish 42 or an ocean bottom 44, for example, that have reflected the sonar signals produced by the sonar transducer unit 12. The display image is produced by using the process and apparatus described herein to calculate illumination values for each pixel within a field of view represented by the display.

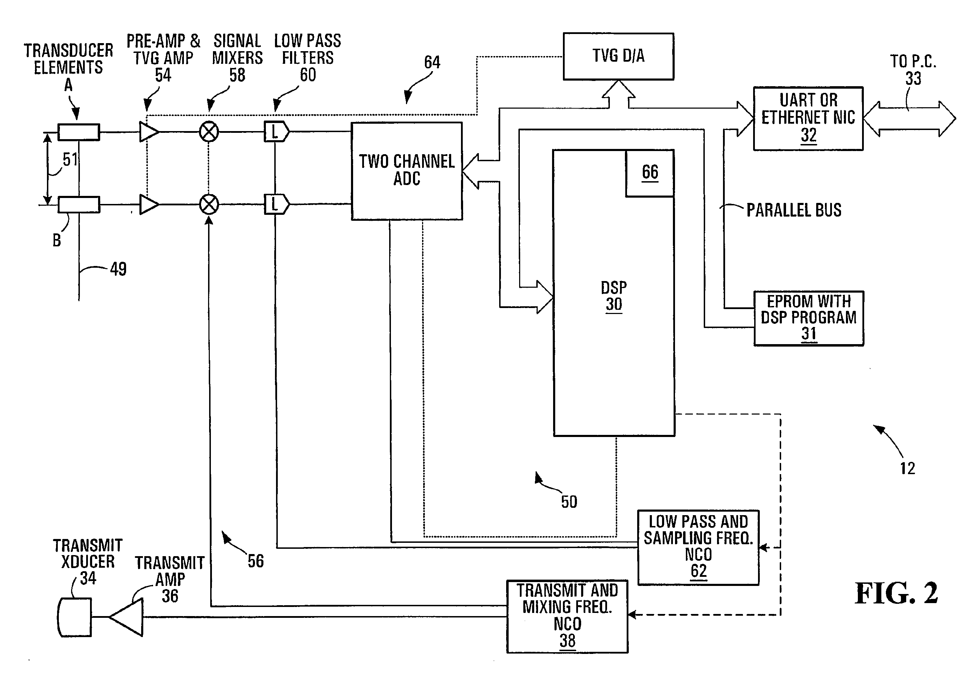

Referring to Figure 2, the sonar transducer unit 12 is shown in greater detail. The sonar transducer unit 12 includes a digital signal processor (DSP) 30 controlled by a program stored in an Erasable Programmable Read Only Memory (EPROM) 31. The DSP 30 is in communication with a communications interface 32, which in this embodiment includes a Universal Asynchronous Receiver Transmitter (UART) or Ethernet Network Interface Chip, for example. The communications interface 32 is in communication with the processor 14 shown in Figure 1, through a cable 33 extending from the transducer unit 12 to the processor 14 and facilitates communications between the DSP 30 and the processor 14. The DSP 30 is operable to receive a "remote" command signal from the processor 14, the remote command signal containing depth range information. The DSP extracts this depth range information and produces one or more "local" command signals to control various components of the sonar transducer unit 12.

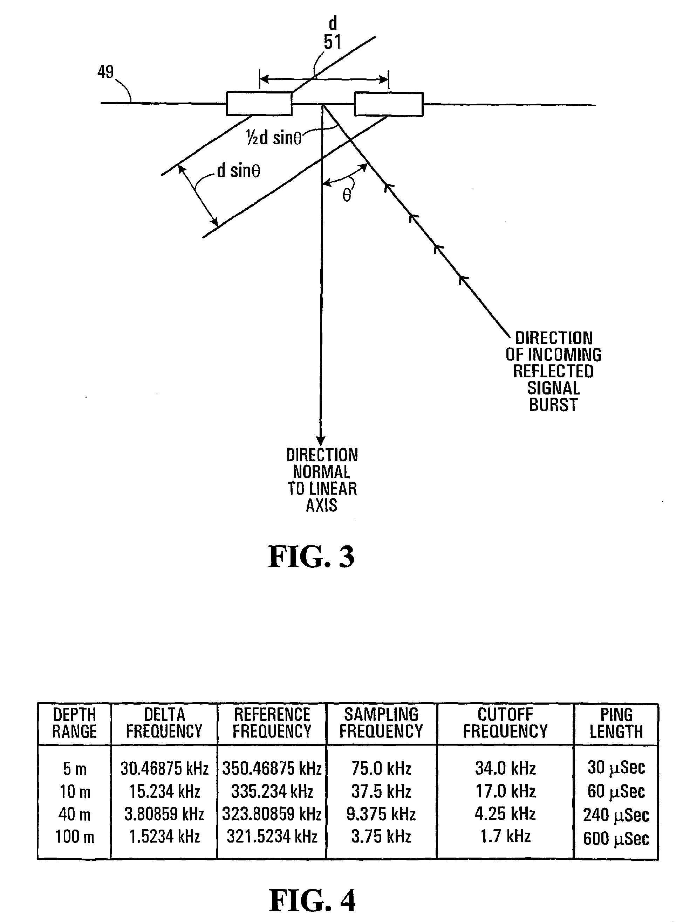

In this embodiment the sonar transducer unit 12 includes a sonar signal source, referred to hereafter as a transmit transducer or sonar signal transducer 34. The transmit transducer 34 produces sonar signals in response to electrical input signals received from a transmit amplifier 36 which receives input signals from a transmit and mixing frequency numerically controlled oscillator (NCO) 38 controlled by a local command signal produced by the DSP 30. In this embodiment, the DSP 30 and transmit and mixing frequency NCO 38 cooperate to cause the transmit transducer 34 to produce a sonar signal burst of acoustic energy having a "ping length", the ping length being dependent upon the depth range of interest specified in the local command signal. Exemplary ping lengths for various depth ranges of interest are shown in Figure 3 and in general, ping length is made longer for greater depth ranges and shorter for lesser depth ranges. The sonar signal burst of acoustic energy also has an acoustic frequency set by the transmit and mixing frequency NCO 38 in response to the local command. The acoustic frequency may be 320 kHz, for example, and in general, it may be any frequency that provides for suitable acoustic energy propagation in the medium (e.g., water in this embodiment) in which depth or distance is to be measured.

Referring back to Figure 1, the burst of acoustic energy propagates through the water and is reflected by elements in the water, such as fish 42 or the ocean bottom 44, for example, which cause a reflected acoustic pressure signal burst to be reflected back to the transducer unit 12.

Referring to Figures 1 and 2, in general, the transducer unit 12 receives the reflected acoustic signal burst at a plurality (m) of transducer elements which in this embodiment includes only two elements, to produce a plurality of received signals, generates a reference signal having a reference frequency dependent on a depth range of interest, heterodynes each of the received signals with the reference signal to produce respective beat signals having a beat frequency, samples each of the beat signals at a sampling frequency dependent on the beat frequency to produce sets of sample values, each set of sample values being associated with a corresponding transducer element, and makes each set of sample values available for processing.

Referring back to Figure **2,** to carry out the above operations, the transducer unit **12** includes a sonar signal receiver apparatus such as shown generally at 50 comprising transducer elements A and B arranged side by side on a linear axis **49** with a spacing **51** of about **3**mm between the transducer elements. Other spacings could be used.

Referring to Figure **3,** the transducer elements A and B receive the reflected acoustic signal burst from any reflecting elements within the water. Generally, for any given beam angle θ measured from a line normal to the linear axis **49,** midway between the transducer elements A and B, the transducer elements receive the reflected signal burst from a given reflecting element at different times due to the difference in distance between the given reflecting element and each transducer element as a result of the spacing **51** between the transducer elements. In general, a reflected sound wave having the same amplitude-time properties is received at each transducer element A and B but appears to be shifted in time due to the differences in travel time of the reflected acoustic signal burst to reach respective transducer elements A and B.

Referring back to Figure **2,** in this embodiment, each of the transducer elements A and B has an associated signal conditioning stage as shown generally at **54,** which, in this embodiment includes a pre-amplifier and time varying gain amplifier for producing a suitably strong amplified analog electrical signal representing the reflected acoustic signal received at the corresponding transducer element.

The receiver apparatus **50** further includes a heterodyning component shown generally at **56** operable to heterodyne each of the amplified transducer element signals with a reference signal to produce respective modulated signals. The reference signal is produced by the transmit and mixing frequency NCO 38 which acts as a reference signal frequency generator to produce the reference signal in response to the local command signal received from the DSP **30.** As stated, the local command is produced by the DSP **30** in response to depth range information in the remote command received from the processor **14.** In this embodiment, the reference signal has a reference frequency which is the sum of the acoustic frequency and a "delta" frequency. Delta frequencies and resulting reference frequencies for various depth ranges are shown in Figure **4.** Thus, in response to a local command signal indicating a depth range of interest, the reference frequency generator (NCO **38**) produces a reference signal having a reference frequency as indicated in the table shown in Figure **4.**

Referring back to Figure **2,** the heterodyning component **56** includes two signal mixers shown generally at **58** which multiply the reference signal with respective individual amplified transducer element signals to produce respective mixed signals. It will be appreciated that a reference signal at a reference frequency associated with a particular depth range is mixed (multiplied) with the signals produced by each transducer element, which have a frequency at the acoustic frequency (e.g., **320**kHz). The resulting modulated signals each have sum and difference components having frequencies $f_1+f_2$ and $f_1$-$f_2$ respectively, which preserve the relative phase of the received sound pressure from the different transducer elements. The difference component also referred to as a beat component contains the amplitude information of the original received signal and has a beat frequency corresponding to the delta frequency employed for the particular depth range of interest. The beat components associated with respective transducer elements A and B are used for further processing in this embodiment.

The beat components are applied to respective cutoff frequency controlled low pass filters as shown generally at **60** to produce respective beat signals. These filters are controlled to have a common cutoff frequency set by a cutoff frequency control signal produced by a low pass and sampling frequency numerically controlled oscillator (NCO) **62** controlled by a local command produced by the DSP **30.** The NCO **62** produces the cutoff frequency signal such that the cutoff frequency of the cutoff frequency controlled low pass filters is dependent upon the beat frequency as determined by the delta frequency set according to the depth range of interest, in response to the local command received from the DSP **30.** The low pass filters **60** thus produce filtered beat signals associated with array elements A and B, respectively, having a frequency dependent on the reference frequency.

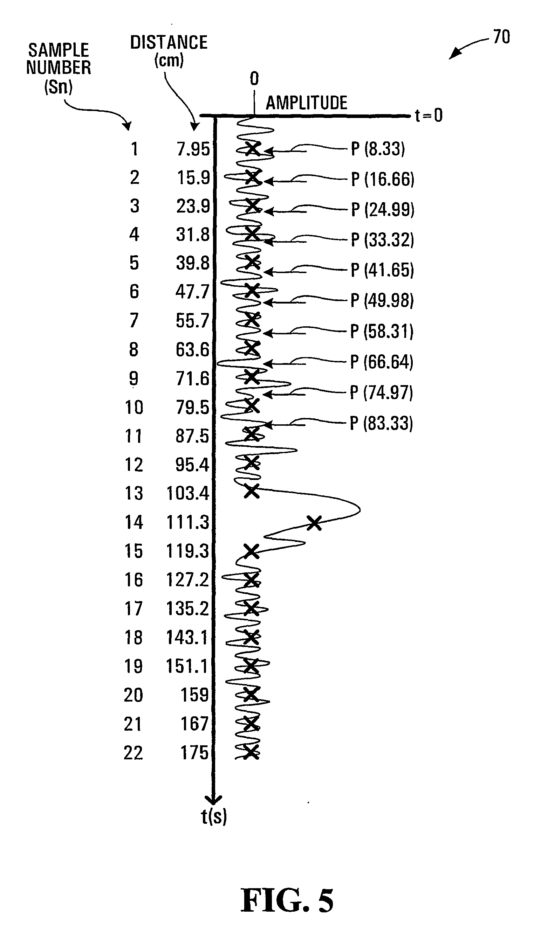

Referring to Figure **5,** a time-amplitude representation of acoustic pressure received at a given transducer element such as element (B), for example, is shown generally at **70.** Amplitude is shown relative to a reference value of zero with positive amplitude values being to the right of the zero value and negative amplitude values being to the left of the zero value. Time is shown increasing in the downward direction. Time is related to distance by the speed of sound in water and thus increasing time relative to a reference time t=0 represents increasing distance from a reference point such as a center point between the two transducer elements A and B, on the linear axis **49** in the sonar transducer unit **12** shown in Figure **1.** In embodiments in which electromagnetic energy is used instead of acoustic energy, the transducers would include antennas and the amplitude of a reflected electromagnetic wave received at an antenna could follow a similar trace.

Referring back to Figure **2,** in the embodiment shown, the transducer unit **12** further includes a sampling component **64** which, in this embodiment, includes the DSP **30** and a two-channel analog to digital converter which cooperates to individually simultaneously sample each of the beat signals to produce respective sets of time domain sample values, each set being associated with a respective transducer element A and B. The DSP **30** initiates sampling shortly after an acoustic burst is issued by the transmit transducer **34** and continues sampling until shortly after all reflected acoustic signals are expected to have been received, as determined by the depth range of interest.

The sets of sample values are stored in memory **66** incorporated in the DSP **30.** To effect sampling, the DSP issues a local command to the low pass and sampling frequency NCO **62** which acts as a sampling signal frequency generator that generates a sampling signal for controlling the sampling component **64** to sample the filtered beat signals at a sampling frequency. The sampling frequency is set according to the depth range of interest and, more particularly, is set to be a multiple of the expected beat frequency of the beat signals, ultimately determined by the "delta" frequency. In this embodiment, the sampling frequency is set at **2.4615** times the delta frequency. Exemplary sampling frequencies for various depth ranges are shown in the table shown in Figure **4.**

Referring back to Figure **2,** the sampling component **64** is controlled such that the same number of sample values is produced regardless of the depth range of interest. In this embodiment, **500** sample values are included in each set of sample values, regardless of range. Thus, in this embodiment, **2** sets of **500** samples are produced. The effect of producing the same number of samples regardless of the depth range of interest is that for greater depth ranges, the distance the sound travels between samples is greater than at lesser depth ranges. Fine resolution over long distances is usually not required and can exceed the resolution of the display and thus, a larger number of samples at a greater depth range is not required.

Referring back to Figure **5,** sample points, i.e. times at which samples are taken by the sampling component **64** of Figure **2,** are shown with an x. The x's thus depict sample-defined positions along the waveform. A corresponding distance in cm for a **40**m-depth range of interest is shown for each sample point. A corresponding sample number $S_n$ is also shown. Thus, for example, sample number **6** is associated with a distance of **47.7**cm from the transducer elements A and B.

Referring back to Figures **1** and **2,** the programs in the EPROM **31** include program code for implementing a communications function to cause the DSP **30** to transmit to the processor **14,** via the communications interface **32,** the sets of sample values for further processing at the processor **14.** These codes and the DSP **30** act as a communications component operable to communicate each set of sample values to the processor **14** for interpretation to control the illumination of pixels on the display **16** to ultimately produce a display image.

In other embodiments, a plurality of transducer elements may be employed. For example, an array of sixteen transducer elements may be employed and a separate set of sample values may be produced and communicated to the processor **14** for each respective transducer element. As will be appreciated below, at least two sets of samples from two separate, spaced apart transducers are required.

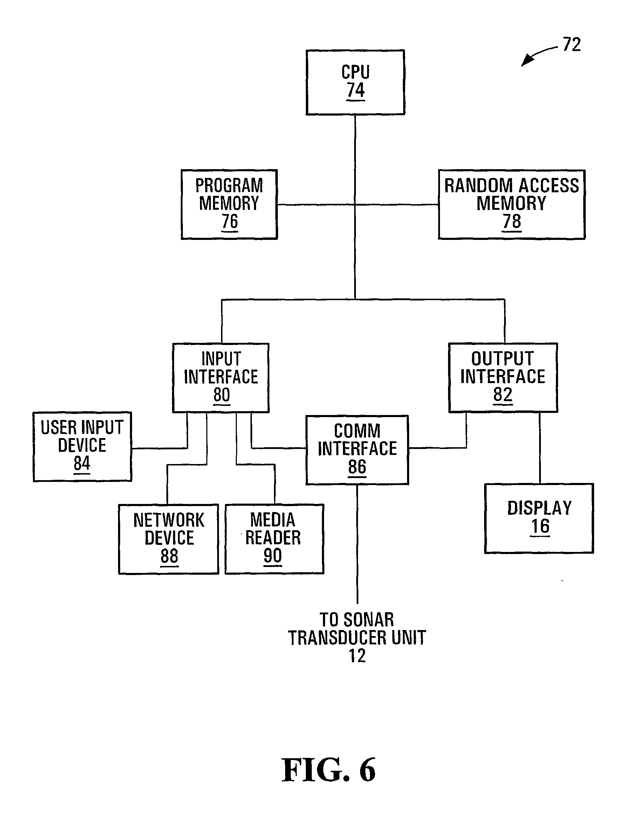

Referring back to Figure **1,** the processor **14** may include a Personal Computer (PC) style computer, for example, of the type having a **2.8GHz** Pentium IV processor chip, for example. Various computer implementations could be used, provided they have enough processing speed to perform the calculations described below sufficiently fast to avoid a noticeable delay in producing successive updates of a display image seen on the display **16.** For completeness, an exemplary processor circuit, suitable to perform the operations described herein is shown at **72** in Figure **6.** The exemplary processor circuit includes a central processing unit (CPU) **74,** program memory **76,** random access memory **78** an input interface 80 and an output interface **82.**

The program memory **76** acts as a computer readable medium for storing program codes for directing the CPU, (hereinafter referred to as a processor) to carry out the functions described herein. The random access memory **78** may be used by the processor to store the sets of samples from each transducer element, for example.

The input interface **80** is in communication with a user input device **84,** which may include a keyboard, pointing device or other human interface. The input interface **80** and the output interface **82** are in communication with a communications unit **86** which is in communication with the sonar transducer unit **12** to permit the processor to send the above described remote command to the sonar transducer unit **12** and to permit the processor to receive the sets of sample values associated with respective transducers.

The input interface **80** may include provisions such as a network interface 88 for receiving from a network, such as the Internet, computer readable signals encoded with codes operable to be stored in the program memory **76** for directing the processor to carry out one or more of the functional tasks described herein.

In addition, or alternatively, the input interface **80** may be connected or connectable to a media reader **90** operable to read computer readable media that may provide codes operable to be stored in the program memory **76** for directing the processor to carry out one or more of the functional tasks described herein. The output interface **82** is in communication with the display **16** to control the display to produce an image representing objects beneath the boat.

In general, the codes stored in the program memory **76** direct the processor to carry out a process for producing illumination signals for use in controlling illumination of pixels on a display, in response to the sets of sample values associated with respective transducers.

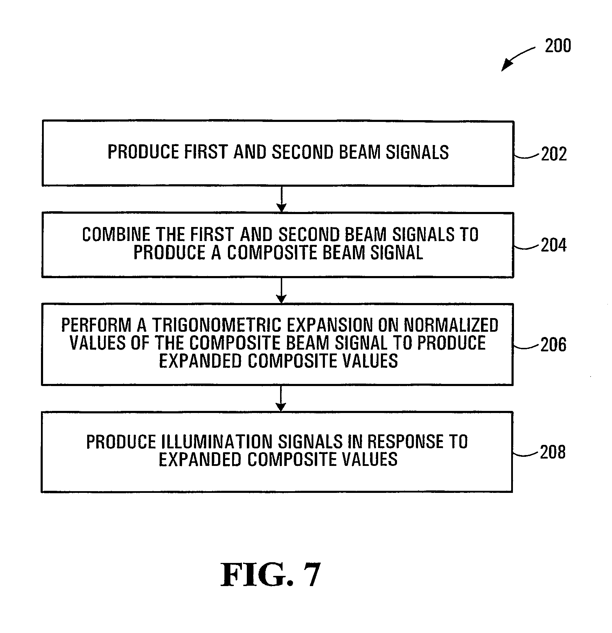

Referring to Figure **7,** as shown at **200,** a broad explanation of the process for producing signals for controlling a display to produce an image in an imaging system is shown. As shown at **202,** the process involves producing first and second beam signals in response to delayed channel signals associated with respective transducers. The delayed channel signals may be previously produced by the same processor or another processor in response to the sets of sample values associated with respective transducers and represent real and imaginary components of time domain signals associated with respective transducers, suitably delayed to focus a receive beam pattern of the transducers at a beam angle. Effectively, the function shown in block **202** involves combining the delayed channel signals to produce only two beam signals. Each of the first and second beam signals includes separate real and imaginary component representations. Combining the delayed channel signals for respective transducers may be done by adjusting the amplitudes of the sample values of each set of samples, according to suitable delay values associated with a desired beam angle at which it is desired to focus the array and then for each sample time, adding the adjusted sample values to produce a combined sample value for that sample time. The combined sample values may then be scaled, as desired, into a workable range.

Combining sets of sample values can be done symmetrically, such as by combining the delayed channel signals associated with the first eight transducers in a set of sixteen transducer elements, for example, to produce the first beam signal and then combining the sample values associated with the ninth through sixteenth transducers to produce the second beam signal.

Alternatively, the sets of sample values associated with each transducer may be asymmetrically combined. For example, the set of sample values associated with the first through fourth transducers may be combined to produce the first beam signal and the sets of sample values associated with the fifth through sixteenth transducers may be combined to produce the second beam signal, or vice versa.

When sets of samples for a plurality of transducers are combined into two beam signals, effectively each beam signal represents a channel signal associated with a respective virtual transducer, since there is no single transducer with which the actual first and second beam signals are associated. Thus, the first and second beam signals represent received at a respective real or virtual transducer.

As shown at **204,** the process then involves combining the real and imaginary components of the first and second beam signals, to produce a composite beam signal. The composite beam signal includes separate real and imaginary component representations.

As shown at **206,** the process then involves performing a trigonometric expansion on normalized values of the real and imaginary component representations of the composite beam signal to produce a plurality of expanded values.

As shown at **208,** the process then involves producing illumination signals in response to the expanded values, for illuminating pixels on the display.

The broad process shown in Figure **7** may be used in the acoustic imaging system shown in Figure **1,** with suitable adaptations to facilitate use with a plurality of transducers, if desired, and with certain considerations for processing information for a plurality of beam angles at once.

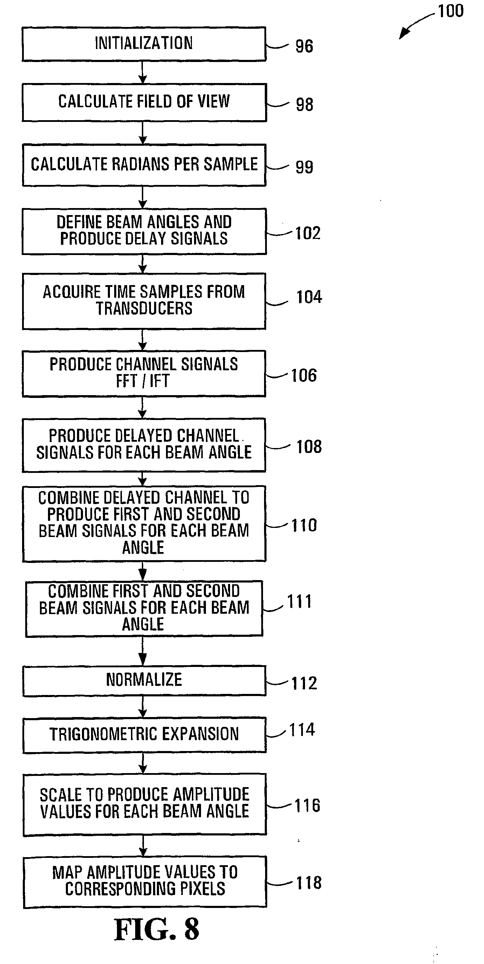

An embodiment of the broad process adapted for use in the acoustic imaging system of Figure **1,** is shown generally at **100** in Figure **8**. In this embodiment, the generic process shown in Figure **7** has been adapted to further include additional functions to adapt the process to the particular display used.

The process applied to the acoustic imaging system in Figure **1** includes a first initialization step depicted generally at **96** in Figure **8**. Initialization is carried out by a block of program codes that directs the processor **72** shown in Figure **6** to retrieve initialization parameters from program memory **76**. Initialization parameters may be stored in a file and retrieved by the processor on power up. These initialization parameters may be used by the processor to set color schemes for the display **16,** for example, by creating a mapping between signal intensity and color. The color red for example may be used to identify signal portions of greater intensity or amplitude, while blue for example may be used to represent signal intensity or amplitude near zero. The initialization parameters may also be used to initialize any mathematical variable or arrays used for computations to follow.

The processor may include routines (not shown), that cause it to receive user input from the user input device **84,** or referring to Figure **2,** to communicate with the DSP **30** in the transducer unit **12,** to acquire data indicating the spacing **51** between the transducer elements (e.g. **3**mm), the acoustic frequency (e.g. **320**kHz), the speed of sound in water (e.g. **1500**m/s), the sampling frequency used by the receiver (e.g. **9.375**kHz) and any other information that may be necessary. In addition user input may be provided through the user input device **84** to indicate to the processor the dimensions or useable area of the display **16** in pixels (e.g. **640**x**480**), for example, in which an image may be displayed.

In addition, as part of the initialization, program codes (not shown) may be provided to present menus on the display **16** to permit a user to select a depth range of interest. The user may select a depth range of **5, 10, 20** or **40** meters, for example, and referring to Figure **1,** may select a reference plane **103** such as a plane coincident with the linear axis **49,** or a non-axis-coincident reference plane **105** at a depth below the plane coincident with the linear axis. The range may be set to **40** meters, for example and the reference plane may be set at **20** meters, for example, thus selecting an area of interest of between **20** and **40** meters depth. Regardless of the area of interest, once the area of interest is known, and the useable area of the display **16** is known, a mapping can be created to map the locations of pixels on the display to corresponding locations within the area of interest. In other words, pixel positions on the display are mapped to or associated with "pixel-defined positions" in the area of interest. In addition, once the range is known, the reference frequency, sample frequency and filter cutoff frequency to be used by the transducer unit may be determined from the table shown in Figure **4,** before any acoustic energy is emitted or received.

Referring back to Figure **8,** after the initialization provided by block **96,** block **98** directs the processor to determine a field of view of the system according to the relation:

$$B_{max} = 2\sin^{-1}\left(\frac{c_s}{2fd}\right)$$

Where:

$B_{max}$     is the field of view in degrees;
$c_S$     is the speed of sound in water (e.g. **1500**m/s);
f     is the acoustic frequency (e.g. **320**kHz); and
d     is the transducer element spacing (e.g. 3mm).

Using the above exemplary numbers, an exemplary field of view is **102.75** degrees centered on the linear axis **49.** Once the field of view has been calculated, the processor sets the color of every pixel associated with a location outside of the field of view to black, and only considers and performs calculations to determine illumination intensity for pixels at locations on the display **16** that have corresponding locations inside the field of view, in the area of interest.

After determining the field of view, block **99** directs the processor to pre-calculate the number of radians per sample of the original sound waves according to the relation:

$$R_d = 2\pi f/S_r$$

Where:

$R_d$     is the number of radians per sample

f     is the frequency of the acoustic energy (e.g., **320**kHz)

$S_r$     is the sample rate in samples per second (e.g., **9.375** kHz)

Block **102** directs the processor to produce delay signals in response to transducer spacing, angular frequency of wave energy received at the transducers, desired beam angle and speed of the wave energy in an area of a medium for which the image is to be produced.

Referring back to Figure **8** block **102** first directs the processor to define a plurality of beam angles and pre-calculate delay signals for each beam angle within the field of view. In the embodiment shown, arbitrarily, **150** beam angles are defined.

Referring to Figure **3,** if the sound energy reflected from a reflecting element is received at the transducers at an angle θ relative to a direction normal to the linear axis **49,** the sound must travel a distance dsinθ after it is received at the transducer element B before it is received at the other transducer element A. Thus, to steer a receive beam to detect sound reflections from a given beam angle θ within the field of view, respective transducer-dependent time delays must be imposed on signals produced by the transducer element B that receives the acoustic pressure before the other transducer element A.

The transducer-dependent time delay in seconds, in a two-transducer system is given by the relation:

$$D = \frac{d\sin\theta}{c}$$

Where:

D     is the transducer-dependent time delay
d     is the transducer element spacing
θ     is an angle of incidence of sound energy reflected from a reflecting element within the field of view, i.e., beam angle
c     is the speed of sound in water (e.g. **1500**m/s)

The transducer-dependent delay D may be expressed in units of samples by multiplying the result of the calculation above by the sample rate $S_r$, to produce a delay value Δ representing a transducer-dependent radian advancement or retardation in a two transducer system as follows:

$$\Delta = \frac{dS_r Sin\theta}{c}$$

Where:

Δ     is the range delay in units of samples
$S_r$     is the sampling frequency in samples per second
d     is the transducer element spacing
θ     is an angle of incidence of sound energy reflected from a reflecting element within the field of view
c     is the speed of sound in water

The transducer dependent delay may be expressed in units of radians by multiplying Δ by the number of radians per sample $R_d$:

$$ST_r = \Delta\ R_d$$

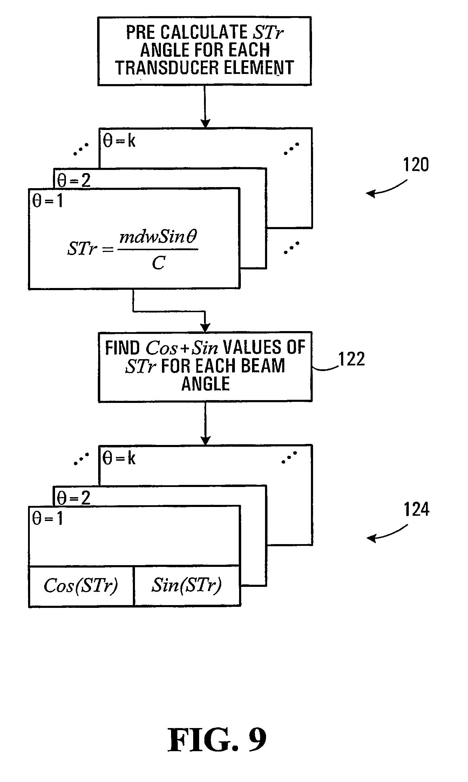

Referring to block **120** in Figure **9,** in this embodiment, $ST_r$ values are calculated for all **150** beam angles, for example, within the above calculated field of view, according to the relation:

$$\theta_{[k]}, k = 1\ to\ 150 : ST_r[k][m] = \frac{md\omega sin(\theta[k])}{c}$$

Where:

$\theta_{[k]}$     is the $k^{th}$ beam angle
m     is the $m^{th}$ transducer element
$ST_r$     is the range delay in units of radians
d     is the transducer element separation distance
c     is the speed of sound in water
ω     is the cyclic frequency of the emitted acoustic burst

The above relation provides a suitable approximation for calculating delay values where it is assumed the sound wave impinging upon the transducer elements is a plane wave. Other geometric relations may be more suitable for calculating beam angles where the impinging sound wave is more spherical for example, i.e. at close range. For example, if a representation of a pixel position of interest can be obtained relative to the transducer elements, simple triangulation can be used to determine a corresponding beam angle for that pixel and each transducer element.

As shown in Figure **9,** pre-calculation of the range delay $ST_r$ for each beam angle results in **150** transducer-dependent phase values ($ST_r[k][m]$), represented in units of radians, for each transducer element as depicted generally at **120.** As shown at **122,** sine and cosine values are then produced for each beam angle, i.e., Sin ($ST_r[k][m]$) and Cos ($ST_r[k][m]$), to produce **150** pairs of Sine and Cosine values as shown at **124,** for each of the first and second transducers A and B, for each beam angle.

The sine and cosine values associated with the first transducer act as a first delay signal and the sine and cosine values associated with the second transducer act as a second delay signal. Thus it will be appreciated that in this embodiment, the first and second delay signals are pre-calculated before receiving or producing the first and second channel signals. Alternatively, the delay signals for each transducer may be pre-calculated by another processor and sent to the processor shown in Figure **6,** or they may be pre-calculated and stored in memory for use by the processor shown in Figure **6.**

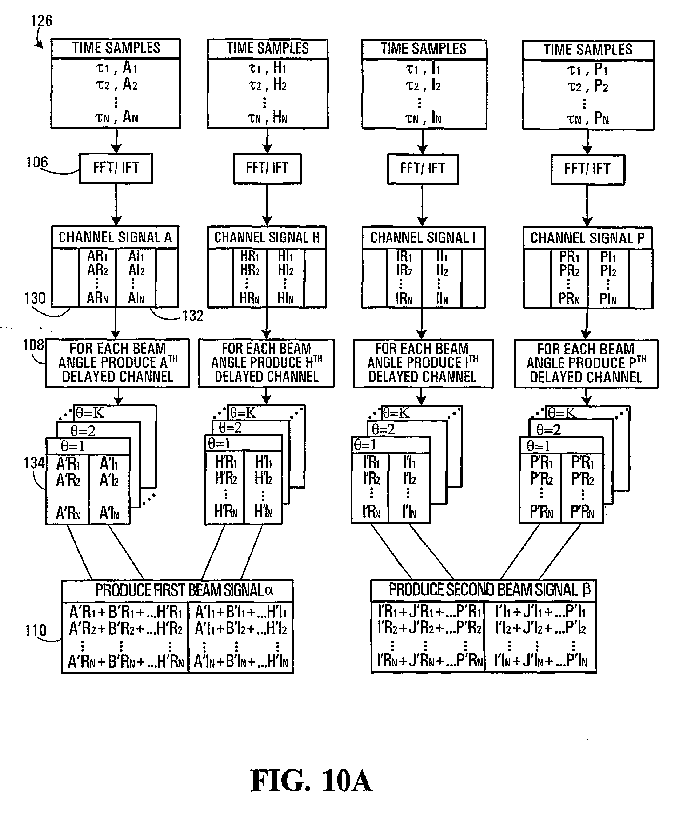

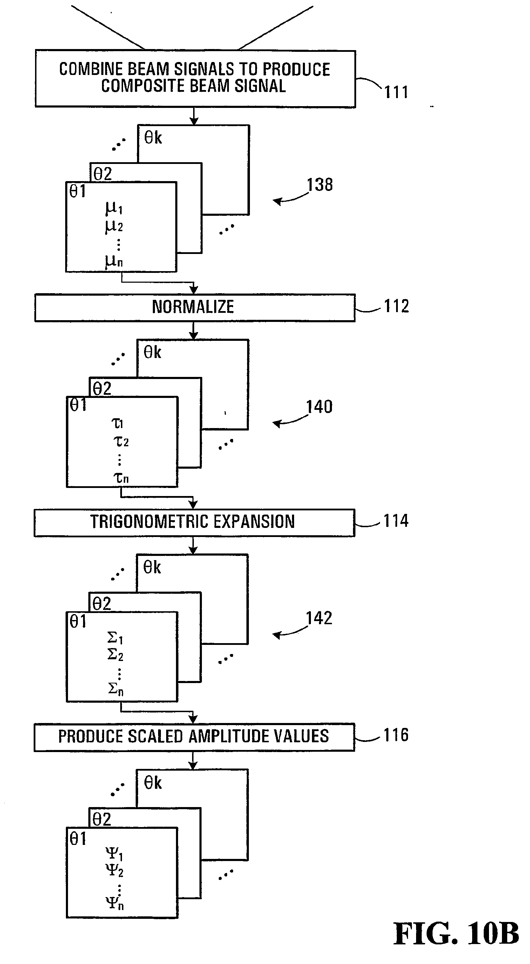

Referring back to Figure **8,** block **104** directs the processor to acquire time samples from the transducers. This may involve causing the processor shown in Figure **6** to communicate with the transducer unit **12,** to cause it to initiate the sampling process as described above to cause the transducer unit to send sets of samples from each transducer to the processor shown in Figure **6.** Representations of time samples are shown generally at **126** in Figure **10**A, for example.

Block **106** then directs the processor to produce channel signals for respective transducers, in response to respective sets of time samples. To do this the processor is directed to perform a Fourier Transform on each respective data set **126** to produce respective frequency domain representations of the sets of time samples and then to perform an inverse Fourier Transform on respective frequency domain representations to produce respective representations of synthesized waveforms representing time domain representations of the waveforms associated with respective transducers. The representations of the synthesized waveforms may be referred to as channel signals.

Each synthesized waveform for each real or virtual transducer has the form:

$$A(t)\cos(\omega t)$$

Where:

A(t)   is a time varying amplitude value dependent upon acoustic pressure received at the corresponding transducer element;

$\omega$   is $2\pi f$, where f is the acoustic frequency; and

t   is a time value representing time since sampling was started

The inverse Fourier Transform effectively provides sets of values **130** and **132** for each respective transducer, each set representing real and imaginary portions of its respective synthesized waveform at a plurality of sample points in time. The sets of values **130** and **132** thus represent a channel signal for corresponding transducers.

The sample times of the Inverse Fourier Transform may be referred to as Fourier sample times and coincide with the sample times of the original waveforms. In this embodiment, there are **500** such Fourier sample points for which there are corresponding amplitude values for each of the real and imaginary components, representing each synthesized waveform. The use of the Fourier Transform, immediately followed by an Inverse Fourier Transform, quickly and efficiently produces accurate representations of the real and imaginary portions of the synthesized waveform for convenient use in later calculations.

It will be appreciated that the processor may produce the channel signals in response to time samples from corresponding transducers or another processor may produce them and they may be received by the processor shown in Figure **6** and processed as described below, regardless of whether they are produced or received by the processor shown in Figure **6.**

Channel signals are produced using the process described above in connection with blocks **126** and **106,** for each transducer.

Still referring to Figures **8** and **10A,** after the first and second channel signals have been produced, block **108** directs the processor to produce the first and second delayed channel signals in response to the delay signals produced at block **102** and the channel signals produced at block **106.**

For the first transducer, A, the Real and Imaginary components of the first channel signal are calculated as follows:

Real:   $A'R_{k,n} = (\text{Real } A_{k,n})(\text{Cos}(ST_r[k][1])) - (\text{Imag } A_{k,n})(\text{Sin}(ST_r[k][1]))$

$$\text{Imaginary:} \quad A'I_{k,n} = (\text{Real } A_{k,n})(\text{Sin}(ST_r[k][1])) + (\text{Imag } A_{k,n})(\text{Cos}(ST_r[k][1]))$$

where k = **1** to **150** beam angles, n = **1** to **500** sample points
For the second transducer, B, the Real and Imaginary components of the second beam signal are calculated as follows:

$$\text{Real:} \quad B'R_{k,n} = (\text{Real } B_{k,n})(\text{Cos}(ST_r[k][2])) - (\text{Imag } B_{k,n})(\text{Sin}(ST_r[k][2]))$$

$$\text{Imaginary:} \quad B'I_{k,n} = (\text{Real } B_{k,n})(\text{Sin}(ST_r[k][2])) + (\text{Imag } B_{k,n})(\text{Cos}(ST_r[k][2]))$$

where k = **1** to **150** beam angles, n = **1** to **500** sample points
In general, if there are more than two transducers, such as **16** transducers, as shown in Figure **10**A, the transducers may be labeled A-P and real and imaginary components for the delayed channel signal associated with a respective transducer may be calculated using the relations shown above. The result is shown generally at **134** in Figure **10A** where real and imaginary components of each delayed channel signal, for each beam angle are given for respective transducers A - P. Regardless of the number of transducers used, a delayed channel signal comprising real and imaginary components for a plurality of time samples and for a plurality of beam angles is produced for each respective transducer. The delayed channel signals represent real and imaginary components of time domain signals associated with the transducers, suitably delayed to focus a receive beam pattern of the transducers at a beam angle.
Referring to Figures **8** and **10**A, as shown at **110,** the transducers are then divided into two groups and the delayed channel signals of each group are combined to produce first and second beam signals respectively. In other words, the first and second beam signals are produced in response to the delayed channel signals.
In the case where **16** transducers are used and the transducers are divided symmetrically, the first beam signal is comprised of real and imaginary components $\alpha'R_{k,n}$, $\alpha'I_{k,n}$, respectively, which may be produced according to the relations:

$$\alpha'R_{k,n} = A'R_{k,n} + B'R_{k,n} + \dots H'R_{k,n}$$

$$\alpha'I_{k,n} = A'I_{k,n} + B'I_{k,n} + \dots H'I_{k,n}$$

The second beam signal is comprised of real and imaginary components which may be produced according to the relations:

$$\beta'R_{k,n} = I'R_{k,n} + J'R_{k,n} + \dots P'R_{k,n}$$

$$\beta'I_{k,n} = I'I_{k,n} + J'I_{k,n} + \dots P'I_{k,n}$$

As mentioned above, the transducers need not be grouped symmetrically. For example, the first four delayed channel signals may be combined as described above to produce the first beam signal and the fifth through sixteenth delayed channel signals may be combined to produce the second beam signal or other combinations of channel signals may be used.
Regardless of how the transducers are grouped, only two beam signals for each beam angle are ultimately produced.

Referring to Figure **10B** as shown at **111**, the real and imaginary components of the first and second beam signals are combined, to produce a composite beam signal for each beam angle, each composite beam signal including separate real and imaginary component representations as shown at **138**.

The composite beam signal is comprised of a plurality of magnitude values produced according to the relation below in which the value $\mu$, represents the amplitude value of the composite beam signal at sample point n, at the given beam angle.

$$\mu_{k,n} = \sqrt{((\alpha R_{k,n})(\beta R_{k,n}) + (\alpha I_{k,n})(\beta I_{k,n}))^2 + ((\alpha I_{k,n})(\beta R_{k,n}) - (\alpha I_{k,n})(\beta R_{k,n}))^2}$$

where k = **1** to **150** beam angles, n = **1** to **500** sample points

Block **112** then directs the processor to normalize the composite beam signal to produce a normalized composite beam signal for each beam angle. To do this, for each of the magnitude values of the composite beam signal the processor is directed to calculate a real part of the product of the first beam signal and the complex conjugate of the second beam signal and then scale the real part by the magnitude value. Thus, normalized composite values for each beam angle are produced according to the relation:

$$\tau_{rec\,k,n} = \frac{((\alpha R_{k,n})(\beta R_{k,n}) + (\alpha I_{k,n})(\beta I_{k,n}))}{\mu_{k,n}}$$

where k = **1** to **150** beam angles, n = **1** to **500** sample points

The normalized composite beam signal is thus comprised of a set of normalized composite values. The sets of normalized composite values are shown generally at **140** in Figure **10B.**

Referring back to Figure **8,** block **114** then directs the processor to perform a trigonometric expansion on each normalized composite value of each set of normalized composite values to produce expanded composite values. In the embodiment shown, the trigonometric expansion is the power expansion on respective values of the composite beam signal according to the relation:

$$\Sigma_{k,n} = 1 + \tau_{rec\,k,n} + (\tau_{rec\,k,n})^2 + (\tau_{rec\,k,n})^3 + \ldots(\tau_{rec\,k,n})^Z$$

where k = **1** to **150** beam angles, n = **1** to **500** sample points

In the embodiment shown z may be **17,** for example.

This produces a set of expanded composite values for each beam angle, as shown at **142.** Each of these expanded composite values for each angle will be near z if the signals of beams of the transducers are in phase, and will sum to near **1** otherwise.

In other embodiments, performing a trigonometric expansion may comprise performing a sum of Chebyshev polynomials on respective values of the composite beam signal.

Block **116** then directs the processor to produce scaled amplitude values from the expanded composite values according to the relation:

$$\Psi_{k,n} = \Sigma_{k,n} (\mu_{k,n})^{\frac{1}{2}}$$

where k = **1** to **150** beam angles, n = **1** to **500** sample points

The result is a set of amplitude values for each beam angle.

Referring back to Figure **8,** block **118** directs the processor to map the sets of amplitude values associated with respective beam angles to corresponding rays on the display, and to use the amplitude values in a given set of amplitude values control the illumination intensity of respective pixels along the ray.

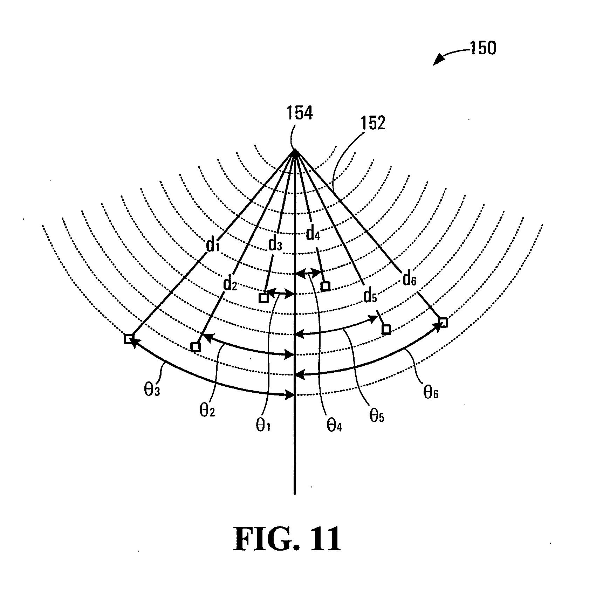

Referring to Figure **11,** an exemplary representation of the display **16** is shown generally at **150.** The display may include a rectangular pixel array of **640** by **480** pixels, for example. Rays, one of which is designated **152** may be defined to emanate from a common point such as shown at **154,** which corresponds to the centerpoint between the transducers A and B shown in Figures **2** and **3.** In Figure **11,** six rays are shown, each at a different angle **1** - **6** corresponding to a respective beam angle. From the initialization procedures performed by block **96** in Figure **7** and from the knowledge of the field of view and number of radians per sample determined by blocks **98** and **99** in Figure **7,** the sample time is known and thus so is the sample distance.

The sample distance may be related to pixels on the display by mapping the sample distance to a pixel distance representing a distance on the display, from the common point **154.** The mapping, of course, depends upon the scale of the display.

Effectively, for a given beam angle, the representative waveform shown in Figure **5** may be considered to lie on one of the rays shown in Figure **11** such that the zero time position is coincident with the common point **154** and a maximum time point is coincident with the **480**th pixel along the ray. In effect, the representative waveform is mapped onto the ray on the display **16.**

If the sampling frequency is **9.375**KHz, the sampling period is **1/9.375**KHz = **106** microseconds. Since sound travels at approximately **1500**m/s in water, in the time between successive sample times, the sound travels **0.159**m, thus, between time=**0** and the first sample time, the sound must travel from the transmit transducer to the underwater element and back to the receive transducers. The total distance traveled is twice the distance to the underwater element, thus, each time between samples represents a depth increment or sample distance of **0.159/2** = **0.0795**m, i.e., a sample distance of **7.95**cm. Sample distance values are thus shown at the left-hand side of Figure **5,** in **7.95**cm increments, corresponding to sample times. Sample numbers $S_n$ operable to be used to identify specific samples are shown at the far left hand side.

Referring to Figures **5** and **11,** since the viewing area on the display **16** has a radius of **480** pixels, for a depth range of interest of **40**m, **480** pixels are used to represent **40**m, or **40/480** = **0.0833**m/pixel, i.e. a depth per unit radius of **8.33** cm/pixel. Thus, a plurality of pixel-defined positions p may be marked on the time-amplitude representation as shown. For a given range of interest, the pixels on the display viewing area will generally represent amplitude at different times t than the times x associated with samples.

Knowing the sample number, the sample distance can be calculated and the pixel nearest the sample distance can be illuminated with the corresponding amplitude value. The nearest pixel may be found by using the sample distance and beam angle to find rectangular coordinates for the nearest pixel.

Thus, for pixel addressable displays, the processor simply steps through the set of amplitude values for a given beam angle, calculates the corresponding sample distance from the current sample number, finds the nearest pixel and uses the associated amplitude value to specify a pixel illumination intensity and/or color to illuminate the pixel.

By stepping through successive beam angles and for each beam angle stepping through the sets of amplitude values associated with each beam angle, the pixels along rays associated with beam angles are successively illuminated and the pixels along rays corresponding to successive beam angles illuminated, thereby creating an overall image, representing features that reflect sound in water. The process may be repeated several times per second for all the beam angles, thereby updating the overall image several times per second and providing a real-time image.

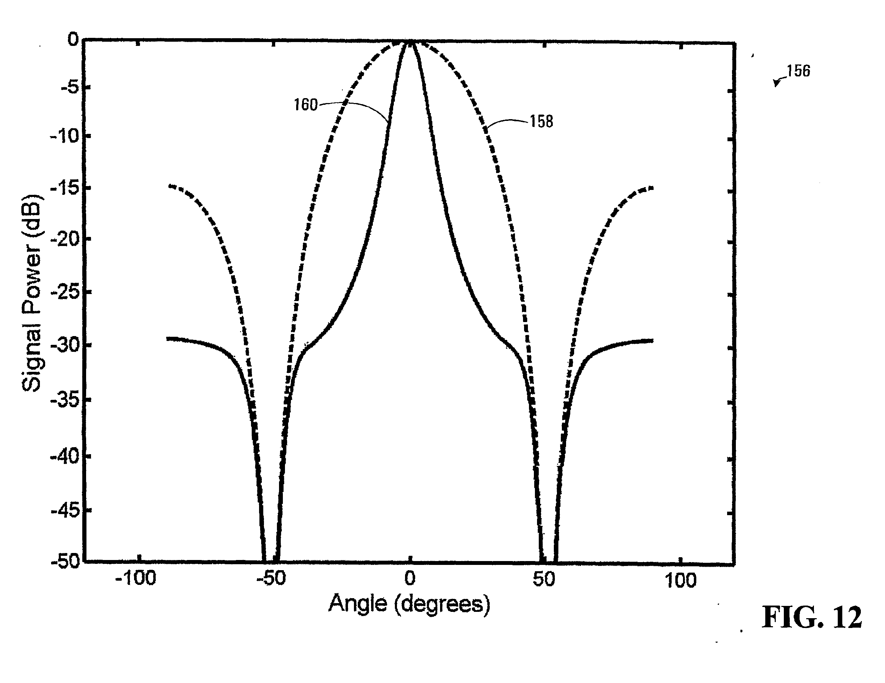

The trigonometric expansion conducted at block **206** in Figure **7** and at block **114** in Figures **8** and **10B** serves to sharpen the focus of the transducers to produce an effective beam width greater than would be achieved without trigonometric expansion. Referring to Figure **12,** representation of beam width with and without the trigonometric expansion is shown generally at **156.** A trace **158,** shown in broken outline, depicts beam width in a system of the type shown without the use of the trigonometric expansion step **114** shown in Figures **8** and **10B.** In other words trace **158** shows beam width for a system in which the normalized composite values are simply scaled to produce the amplitude values used to illuminate pixels on the display.

A trace **160** depicts beam width when the trigonometric expansion step **114** is included in the process and shows a significant narrowing of beam width beginning at about **40** degrees off-center of the beam. The use of the trigonometric expansion step has the effect of causing the transducer array to act as though it were an array of a greater number of transducers. Increasing the degree of the trigonometric expansion greater than the **17**th order as in the embodiment described, has the effect of further focusing the beam, creating the effect of a greater number of transducers.

Thus, there is a clear advantage in using the trigonometric expansion step **114** to narrow the beam width, thereby facilitating greater resolution than would be provided by the physical transducers alone in the system.

Of particular importance in this invention is the accurate production of the delayed channel signals. The method described above involves the use of a Fourier Transform performed on time samples from a given transducer, followed by an inverse Fourier Transform, which accurately produces real and imaginary components of the channel signal for that transducer. These real and imaginary components are used in subsequent calculations and ultimately contribute to the production of the normalized composite values that are used in the trigonometric expansion. Without accurately produced real and imaginary components of the channel signals, such as would be the case with most analog systems, the signal to noise ratio of the channel signals and their components would begin to swamp the higher order terms of the trigonometric expansion, thereby diminishing the value of the higher order terms, rendering them useless and effectively limiting the benefit of the trigonometric expansion. By producing accurate delayed channel signals, such as by the Fourier Transform followed by the Inverse Fourier Transform, many more higher order terms are effective in the trigonometric expansion, resulting in greater focusing of the beam than could otherwise be achieved. Thus, an imaging system with greater accuracy than could otherwise be achieved with conventional components may be made available through the use of this invention.

While specific embodiments of the invention have been described and illustrated, such embodiments should be considered illustrative of the invention only and not as limiting the invention as construed in accordance with the accompanying claims.

## Claims

1. A process for producing signals for controlling a display to produce an image in an imaging system employing a plurality of transducers, the process comprising:

   producing first and second beam signals in response to delayed channel signals associated with respective transducers, said delayed channel signals representing real and imaginary components of time domain signals associated with respective transducers suitably delayed to focus a receive beam pattern of the transducers at a beam angle, each of said first and second beam signals including separate real and imaginary component representations;
   combining said real and imaginary component representations of said first and second beam signals, to produce a composite beam signal, said composite beam signal including separate real and imaginary component representations;
   performing a trigonometric expansion on normalized values of said real and imaginary component representations of said composite beam signal to produce a plurality of expanded values; and
   producing illumination signals in response to said expanded values, for illuminating pixels on the display.

2. The process of claim **1** further comprising receiving said delayed channel signals.

3. The process of claim **1** further comprising producing said delayed channel signals.

4. The process of claim **3** wherein producing said delayed channel signals comprises producing said delayed channel signals in response to channel signals and delay signals associated with said respective transducers,
   each channel signal representing a signal received at a corresponding transducer and including separate real and imaginary component representations; and
   said delay signals including separate cosine and sine delay components of a delay dependent on a desired beam angle at which said transducers are to be focused;
   each of said delayed channel signals including separate real and imaginary component representations.

5. The process of claim **4** further comprising receiving said channel signals.

6. The process of claim **4** further comprising producing said channel signals.

7. The process of claim **6** wherein producing said channel signals comprises producing frequency domain representations of respective time sampled representations of respective signals received at respective transducers and producing time domain representations of said respective signals in response to said frequency domain representations, said time domain representations comprising real and imaginary components.

8. The process of claim **4** further comprising receiving said delay signals.

9. The process of claim **8** further comprising receiving said channel signals and wherein said delay signals are received before said channel signals are received.

10. The process of claim **4** further comprising producing said delay signals.

11. The process of claim **10** further comprising receiving said channel signals and wherein said delay signals are produced before said channel signals are received.

12. The process of claim **10** wherein producing said delay signals comprises producing said delay signals in response to transducer spacing, angular frequency of wave energy received at said transducers, desired beam angle and speed of said wave energy in an area of a medium for which the image is to be produced.

13. The process of claim **1** further comprising producing a normalized composite beam signal comprising a plurality of normalized values, in response to said real and imaginary component representations of said composite beam signal and for each of said normalized values calculating a real part of the product of the first beam signal and a complex conjugate of the second beam signal.

14. The process of claim **13** wherein producing a normalized composite beam signal comprises scaling said real part of a product of the first beam signal and a complex conjugate of the second beam signal, by a magnitude value.

15. The process of claim **14** further comprising producing said magnitude value in response to said real and imaginary components of said first and second beam signals.

16. The process of claim **1** wherein performing said trigonometric expansion comprises performing a power expansion on each of said normalized values.

17. The process of claim **1** wherein performing said trigonometric expansion comprises performing a sum of Chebyshev polynomials on each of said normalized values.

18. The process of claim **1** further comprising illuminating pixels on the display in response to said illumination signals.

19. A process for producing signals for controlling a display to produce an image in an imaging system, the process comprising conducting the process of claim **1** for each of a plurality of beam angles to produce a set of illumination signals for each said beam angle.

20. The process of claim **19** further comprising defining said plurality of beam angles.

21. The process of claim **19** further comprising mapping respective sets of illumination values to respective rays of pixels on said display, each said ray corresponding to a respective beam angle, said illumination signals being operable to cause pixels along a given ray to be illuminated in response to corresponding illumination values.

22. A computer readable medium encoded with instructions for directing a processor to execute the process of claim **1**.

23. A computer readable signal encoded with instructions for directing a processor to execute the process of claim **1**.

24. An apparatus for producing signals for controlling a display to produce an image in an imaging system employing a plurality of transducers, the apparatus comprising:

means for producing first and second beam signals in response to delayed channel signals associated with transducers, said delayed channel signals representing real and imaginary components of time domain signals associated with respective transducers suitably delayed to focus a receive beam pattern of the transducers at a beam angle, each of said first and second beam signals including separate real and imaginary component representations;

means for combining said real and imaginary component representations of said first and second beam signals, to produce a composite beam signal, said composite beam signal including separate real and imaginary component representations;

means for performing a trigonometric expansion on normalized values of said real and imaginary component representations of said composite beam signal to produce a plurality of expanded values; and

means for producing illumination signals, in response to said expanded values, said illumination signals being operable to be received by said display for illuminating pixels on the display.

25. The apparatus of claim **24** further comprising means for receiving said delayed channel signals.

26. The apparatus of claim **24** further comprising means for producing said delayed channel signals.

27. The apparatus of claim **26** wherein said means for producing said delayed channel signals comprises means for producing said delayed channel signals in response to channel signals and delay signals associated with said transducers,
each channel signal representing a signal received at a corresponding transducer and including separate real and imaginary component representations; and
said delay signals including separate cosine and sine delay components of a delay dependent on a desired beam angle at which said transducers are to be focused;
each of said delayed channel signals including separate real and imaginary component representations.

28. The apparatus of claim **27** further comprising means for receiving said channel signals.

29. The apparatus of claim **27** further comprising means for producing said channel signals.

30. The apparatus of claim **29** wherein said means for producing said channel signals comprises:

means for producing frequency domain representations of respective time sampled representations of respective signals received at respective transducers; and
means for producing time domain representations of said respective signals in response to said frequency domain representations,
said time domain representations comprising real and imaginary component representations.

31. The apparatus of claim **27** further comprising means for receiving said delay signals.

32. The apparatus of claim **31** further comprising means for receiving said channel signals and wherein said delay signals are received before said channel signals are received.

33. The apparatus of claim **27** further comprising means for producing said delay signals.

34. The apparatus of claim **33** further comprising means for receiving said channel signals and wherein said delay signals are produced before said channel signals are received.

35. The apparatus of claim **33** wherein said means for producing said delay signals comprises means for producing said delay signals in response to transducer spacing, angular frequency of wave energy received at said transducers, desired beam angle and speed of said wave energy in an area of a medium for which the image is to be produced.

36. The apparatus of claim **24** further comprising means for producing a normalized composite beam signal comprising a plurality of normalized values in response to said real and imaginary component representations of said composite beam signal wherein said means for producing a normalized composite beam signal comprises means for, for each of said normalized values calculating a real part of the product of the first beam signal and a complex conjugate of the second beam signal.

37. The apparatus of claim **36** wherein said means for normalizing comprises means for scaling said real part of a product of the first beam signal and the complex conjugate of the second beam signal, by a magnitude value.

38. The apparatus of claim **37** further comprising means for producing said magnitude value in response to said real and imaginary components of said first and second beam signals.

39. The apparatus of claim **24** wherein said means for performing said trigonometric expansion comprises means for performing a power expansion on each of said normalized values.

40. The apparatus of claim **24** wherein said means for performing said trigonometric expansion comprises means for performing a sum of Chebyshev polynomials on each of said normalized values.

**41.** The apparatus of claim **24** further comprising means for illuminating pixels on the display in response to said expanded values.

**42.** The apparatus of claim **24** further comprising means for causing said apparatus to produce a set of said illumination signals for a plurality of said beam angles.

**43.** The apparatus of claim **42** further comprising means for defining said plurality of beam angles.

**44.** The apparatus of claim **42** further comprising means for mapping respective sets of illumination values to respective rays of pixels on said display, each said ray corresponding to a respective beam angle, said illumination signals being operable to cause pixels along a given ray to be illuminated in response to corresponding illumination values.

**45.** The apparatus according to claim 24, comprising:

memory for storing signals associated with respective transducers; and
wherein said means for producing, said means for combining, and said means for performing use implemented in a processor in communication with said memory.

**46.** The apparatus of claim **45** further comprising an input operably coupled to said processor for receiving said delayed channel signals.

**Patentansprüche**

**1.** Prozess zum Erzeugen von Signalen zum Steuern einer Anzeige zum Erzeugen eines Bildes in einem Bildgabesystem unter Verwendung mehrerer Messwandler, wobei der Prozess Folgendes umfasst:

Erzeugen eines ersten und eines zweiten Strahlsignals in Reaktion auf verzögerte Kanalsignale, die jeweiligen Messwandlern zugeordnet sind, wobei die verzögerten Kanalsignale reale und imaginäre Komponenten von Zeitbereichssignalen darstellen, die jeweiligen Messwandlern zugeordnet sind, die auf geeignete Weise verzögert werden, um ein Empfangsstrahlmuster der Messwandler in einem Strahlwinkel zu fokussieren, wobei sowohl das erste als auch das zweite Strahlsignal separate reale und imaginäre Komponentendarstellungen enthalten;
Kombinieren der realen und imaginären Komponentendarstellungen des ersten und des zweiten Strahlsignals, um ein zusammengesetztes Strahlsignal zu erzeugen, wobei das zusammengesetzte Strahlsignal separate reale und imaginäre Komponentendarstellungen enthält;
Ausführen einer trigonometrischen Entwicklung an normalisierten Werten der realen und imaginären Komponentendarstellungen des zusammengesetztes Strahlsignals, um mehrere entwickelte Werte zu erzeugen; und
Erzeugen von Beleuchtungssignalen in Reaktion auf die entwickelten Werte zum Beleuchten von Pixeln auf der Anzeige.

**2.** Prozess nach Anspruch 1, der des Weiteren das Empfangen der verzögerten Kanalsignale umfasst.

**3.** Prozess nach Anspruch 1, der des Weiteren das Erzeugen der verzögerten Kanalsignale umfasst.

**4.** Prozess nach Anspruch 3, wobei das Erzeugen der verzögerten Kanalsignale das Erzeugen der verzögerten Kanalsignale in Reaktion auf Kanalsignale und Verzögerungssignale, die den jeweiligen Messwandlern zugeordnet sind, umfasst,
wobei jedes Kanalsignal ein Signal darstellt, das in einem entsprechenden Messwandler empfangen wird, und separate reale und imaginäre Komponentendarstellungen enthält; und
wobei die Verzögerungssignale separate Kosinus- und Sinusverzögerungskomponenten einer Verzögerung enthalten, die von einem gewünschten Strahlwinkel abhängig ist, in dem die Messwandler fokussiert werden sollen;
wobei jedes der verzögerten Kanalsignale separate reale und imaginäre Komponentendarstellungen enthält.

**5.** Prozess nach Anspruch 4, der des Weiteren das Empfangen der Kanalsignale umfasst.

**6.** Prozess nach Anspruch 4, der des Weiteren das Erzeugen der Kanalsignale umfasst.

**7.** Prozess nach Anspruch 6, wobei das Erzeugen der Kanalsignale Folgendes umfasst: Erzeugen von Frequenzbereichsdarstellungen jeweiliger zeitlich abgetasteter Darstellungen jeweiliger Signale, die in jeweiligen Messwandlern empfangen werden, und Erzeugen von Zeitbereichsdarstellungen der jeweiligen Signale in Reaktion auf die Frequenzbereichsdarstellungen, wobei die Zeitbereichsdarstellungen reale und imaginäre Komponenten umfassen.

**8.** Prozess nach Anspruch 4, der des Weiteren das Empfangen der Verzögerungssignale umfasst.

**9.** Prozess nach Anspruch 8, der des Weiteren das Empfangen der Kanalsignale umfasst, und wobei die Verzögerungssignale empfangen werden, bevor die Kanalsignale empfangen werden.

**10.** Prozess nach Anspruch 4, der des Weiteren das Erzeugen der Verzögerungssignale umfasst.

**11.** Prozess nach Anspruch 10, der des Weiteren das Empfangen der Kanalsignale umfasst, und wobei die Verzögerungssignale erzeugt werden, bevor die Kanalsignale empfangen werden.

**12.** Prozess nach Anspruch 10, wobei das Erzeugen der Verzögerungssignale das Erzeugen der Verzögerungssignale in Reaktion auf eine Messwandlerbeabstandung, eine Winkelfrequenz einer in den Messwandlern empfangenen Wellenenergie, einen gewünschten Strahlwinkel und eine Geschwindigkeit der Wellenenergie in einem Bereich eines Mediums, für den das Bild erzeugt werden soll, umfasst.

**13.** Prozess nach Anspruch 1, der des Weiteren Folgendes umfasst:

Erzeugen eines normalisierten zusammengesetzten Strahlsignals, das mehrere normalisierte Werte umfasst, in Reaktion auf die realen und imaginären Komponentendarstellungen des zusammengesetzten Strahlsignals; und für jeden der normalisierten Werte: Berechnen eines realen Teils des Produkts des ersten Strahlsignals und einer Komplexkonjugierten des zweiten Strahlsignals.

**14.** Prozess nach Anspruch 13, wobei das Erzeugen eines normalisierten zusammengesetzten Strahlsignals das Skalieren des realen Teils eines Produkts des ersten Strahlsignals und einer Komplexkonjugierten des zweiten Strahlsignals um einen Größenordnungswert umfasst.

**15.** Prozess nach Anspruch 14, der des Weiteren das Erzeugen des Größenordnungswertes in Reaktion auf die realen und imaginären Komponenten des ersten und des zweiten Strahlsignals umfasst.

**16.** Prozess nach Anspruch 1, wobei das Ausführen der trigonometrischen Entwicklung das Ausführen einer Reihenentwicklung an jedem der normalisierten Werte umfasst.

**17.** Prozess nach Anspruch 1, wobei das Ausführen der trigonometrischen Entwicklung das Ausführen einer Summe Tschebyscheffscher Polynome an jedem der normalisierten Werte umfasst.

**18.** Prozess nach Anspruch 1, der des Weiteren das Beleuchten von Pixeln auf der Anzeige in Reaktion auf die Beleuchtungssignale umfasst.

**19.** Prozess zum Erzeugen von Signalen zum Steuern einer Anzeige zum Erzeugen eines Bildes in einem Bildgabesystem, wobei der Prozess das Durchführen des Prozesses nach Anspruch 1 für jeden von mehreren Strahlwinkeln zum Erzeugen einer Menge von Beleuchtungssignalen für jeden der Strahlwinkel umfasst.

**20.** Prozess nach Anspruch 19, der des Weiteren das Definieren der mehreren Strahlwinkel umfasst.

**21.** Prozess nach Anspruch 19, der des Weiteren das Abbilden jeweiliger Mengen von Beleuchtungswerten auf jeweilige Strahlen von Pixeln auf der Anzeige umfasst, wobei jeder der Strahlen einem jeweiligen Strahlwinkel entspricht, wobei die Beleuchtungssignale in der Lage sind zu veranlassen, dass Pixel entlang eines bestimmtes Strahls in Reaktion auf entsprechende Beleuchtungswerte beleuchtet werden.

**22.** Computerlesbares Medium, das mit Instruktionen codiert ist, um einen Prozessor anzuweisen, den Prozess nach Anspruch 1 auszuführen.

**23.** Computerlesbares Signal, das mit Instruktionen codiert ist, um einen Prozessor anzuweisen, den Prozess nach Anspruch 1 auszuführen.

24. Vorrichtung zum Erzeugen von Signalen zum Steuern einer Anzeige zum Erzeugen eines Bildes in einem Bildgabesystem unter Verwendung mehrerer Messwandler, wobei die Vorrichtung Folgendes umfasst:

ein Mittel zum Erzeugen eines ersten und eines zweiten Strahlsignals in Reaktion auf verzögerte Kanalsignale, die jeweiligen Messwandlern zugeordnet sind, wobei die verzögerten Kanalsignale reale und imaginäre Komponenten von Zeitbereichssignalen darstellen, die jeweiligen Messwandlern zugeordnet sind, die auf geeignete Weise verzögert werden, um ein Empfangsstrahlmuster der Messwandler in einem Strahlwinkel zu fokussieren, wobei sowohl das erste als auch das zweite Strahlsignal separate reale und imaginäre Komponentendarstellungen enthalten;
ein Mittel zum Kombinieren der realen und imaginären Komponentendarstellungen des ersten und des zweiten Strahlsignals, um ein zusammengesetztes Strahlsignal zu erzeugen, wobei das zusammengesetzte Strahlsignal separate reale und imaginäre Komponentendarstellungen enthält;
ein Mittel zum Ausführen einer trigonometrischen Entwicklung an normalisierten Werten der realen und imaginären Komponentendarstellungen des zusammengesetztes Strahlsignals, um mehrere entwickelte Werte zu erzeugen; und
ein Mittel zum Erzeugen von Beleuchtungssignalen in Reaktion auf die entwickelten Werte, wobei die Beleuchtungssignale durch die Anzeige zum Beleuchten von Pixeln auf der Anzeige empfangen werden können.

25. Vorrichtung nach Anspruch 24, die des Weiteren ein Mittel zum Empfangen der verzögerten Kanalsignale umfasst.

26. Vorrichtung nach Anspruch 24, die des Weiteren ein Mittel zum Erzeugen der verzögerten Kanalsignale umfasst.

27. Vorrichtung nach Anspruch 26, wobei das Mittel zum Erzeugen der verzögerten Kanalsignale ein Mittel zum Erzeugen der verzögerten Kanalsignale in Reaktion auf Kanalsignale und Verzögerungssignale, die den Messwandlern zugeordnet sind, umfasst,
wobei jedes Kanalsignal ein Signal darstellt, das in einem entsprechenden Messwandler empfangen wird, und separate reale und imaginäre Komponentendarstellungen enthält; und
wobei die Verzögerungssignale separate Kosinus- und Sinusverzögerungskomponenten einer Verzögerung enthalten, die von einem gewünschten Strahlwinkel abhängig ist, in dem die Messwandler fokussiert werden sollen;
wobei jedes der verzögerten Kanalsignale separate reale und imaginäre Komponentendarstellungen enthält.

28. Vorrichtung nach Anspruch 27, die des Weiteren ein Mittel zum Empfangen der Kanalsignale umfasst.

29. Vorrichtung nach Anspruch 27, die des Weiteren ein Mittel zum Erzeugen der Kanalsignale umfasst.

30. Vorrichtung nach Anspruch 29, wobei das Mittel zum Erzeugen der Kanalsignale Folgendes umfasst:

ein Mittel zum Erzeugen von Frequenzbereichsdarstellungen jeweiliger zeitlich abgetasteter Darstellungen jeweiliger Signale, die in jeweiligen Messwandlern empfangen werden; und
ein Mittel zum Erzeugen von Zeitbereichsdarstellungen der jeweiligen Signale in Reaktion auf die Frequenzbereichsdarstellungen,
wobei die Zeitbereichsdarstellungen reale und imaginäre Komponentendarstellungen umfassen.

31. Vorrichtung nach Anspruch 27, die des Weiteren ein Mittel zum Empfangen der Verzögerungssignale umfasst.

32. Vorrichtung nach Anspruch 31, die des Weiteren ein Mittel zum Empfangen der Kanalsignale umfasst, und wobei die Verzögerungssignale empfangen werden, bevor die Kanalsignale empfangen werden.

33. Vorrichtung nach Anspruch 27, die des Weiteren ein Mittel zum Erzeugen der Verzögerungssignale umfasst.

34. Vorrichtung nach Anspruch 33, die des Weiteren ein Mittel zum Empfangen der Kanalsignale umfasst, und wobei die Verzögerungssignale erzeugt werden, bevor die Kanalsignale empfangen werden.

35. Vorrichtung nach Anspruch 33, wobei das Mittel zum Erzeugen der Verzögerungssignale ein Mittel zum Erzeugen der Verzögerungssignale in Reaktion auf eine Messwandlerbeabstandung, eine Winkelfrequenz einer in den Messwandlern empfangenen Wellenenergie, einen gewünschten Strahlwinkel und eine Geschwindigkeit der Wellenenergie in einem Bereich eines Mediums, für den das Bild erzeugt werden soll, umfasst.

**36.** Vorrichtung nach Anspruch 24, die des Weiteren ein Mittel zum Erzeugen eines normalisierten zusammengesetzten Strahlsignals, das mehrere normalisierte Werte umfasst, in Reaktion auf die realen und imaginären Komponentendarstellungen des zusammengesetzten Strahlsignals umfasst, wobei das Mittel zum Erzeugen eines normalisierten zusammengesetzten Strahlsignals ein Mittel umfasst, um für jeden der normalisierten Werte einen realen Teil des Produkts des ersten Strahlsignals und einer Komplexkonjugierten des zweiten Strahlsignals zu berechnen.

**37.** Vorrichtung nach Anspruch 36, wobei das Mittel zum Normalisieren ein Mittel zum Skalieren des realen Teils eines Produkts des ersten Strahlsignals und der Komplexkonjugierten des zweiten Strahlsignals um einen Größenordnungswert umfasst.

**38.** Vorrichtung nach Anspruch 37, die des Weiteren ein Mittel zum Erzeugen des Größenordnungswertes in Reaktion auf die realen und imaginären Komponenten des ersten und des zweiten Strahlsignals umfasst.

**39.** Vorrichtung nach Anspruch 24, wobei das Mittel zum Ausführen der trigonometrischen Entwicklung ein Mittel zum Ausführen einer Reihenentwicklung an jedem der normalisierten Werte umfasst.

**40.** Vorrichtung nach Anspruch 24, wobei das Mittel zum Ausführen der trigonometrischen Entwicklung ein Mittel zum Ausführen einer Summe Tschebyscheffscher Polynome an jedem der normalisierten Werte umfasst.

**41.** Vorrichtung nach Anspruch 24, die des Weiteren ein Mittel zum Beleuchten von Pixeln auf der Anzeige in Reaktion auf die entwickelten Werte umfasst.

**42.** Vorrichtung nach Anspruch 24, die des Weiteren ein Mittel umfasst, um die Vorrichtung zum Erzeugen einer Menge von Beleuchtungssignalen für mehrere der Strahlwinkel zu veranlassen.

**43.** Vorrichtung nach Anspruch 42, die des Weiteren ein Mittel zum Definieren der mehreren Strahlwinkel umfasst.

**44.** Vorrichtung nach Anspruch 42, die des Weiteren ein Mittel zum Abbilden jeweiliger Mengen von Beleuchtungswerten auf jeweilige Strahlen von Pixeln auf der Anzeige umfasst, wobei jeder der Strahlen einem jeweiligen Strahlwinkel entspricht, wobei die Beleuchtungssignale in der Lage sind zu veranlassen, dass Pixel entlang eines bestimmtes Strahls in Reaktion auf entsprechende Beleuchtungswerte beleuchtet werden.

**45.** Vorrichtung nach Anspruch 24, die Folgendes umfasst:

Speicher zum Speichern von Signalen, die jeweiligen Messwandlern zugeordnet sind; und wobei das Mittel zum Erzeugen, das Mittel zum Kombinieren und das Mittel zum Ausführen in einem Prozessor implementiert sind, der mit dem Speicher kommuniziert.

**46.** Vorrichtung nach Anspruch 45, die des Weiteren einen mit dem Prozessor wirkverbundenen Eingang zum Empfangen der verzögerten Kanalsignale umfasst.

**Revendications**

**1.** Procédé pour produire des signaux pour commander à un affichage de produire une image dans un système d'imagerie employant une pluralité de transducteurs, le procédé comprenant les étapes consistant à :

produire des premier et deuxième signaux de faisceau en réponse à des signaux de canal retardés associés à des transducteurs respectifs, lesdits signaux de canal retardés représentant des composantes réelles et imaginaires des signaux de domaine de temps associés à des transducteurs respectifs retardés de manière appropriée pour concentrer un motif de faisceau de réception des transducteurs à un angle de faisceau, chacun desdits premier et deuxième signaux de faisceau comprenant des représentations de composantes réelles et imaginaires distinctes ;
combiner lesdites représentations de composantes réelles et imaginaires desdits premier et deuxième signaux de faisceau pour produire un signal de faisceau composite, ledit signal de faisceau composite comprenant des représentations de composantes réelles et imaginaires distinctes ;

effectuer une expansion trigonométrique sur des valeurs normalisées desdites représentations de composantes réelles et imaginaires dudit signal de faisceau composite pour produire une pluralité de valeurs étendues ; et produire des signaux d'illumination en réponse aux dites valeurs étendues pour illuminer des pixels sur l'affichage.

2. Procédé selon la revendication 1, comprenant en outre l'étape consistant à recevoir lesdits signaux de canal retardés.

3. Procédé selon la revendication 1, comprenant en outre l'étape consistant à produire lesdits signaux de canal retardés.

4. Procédé selon la revendication 3, dans lequel l'étape consistant à produire lesdits signaux de canal retardés comprend l'étape consistant à produire lesdits signaux de canal retardés en réponse aux signaux de canal et aux signaux de délai associés aux dits transducteurs respectifs,
chaque signal de canal représentant un signal reçu à un transducteur correspondant et comprenant des représentations de composantes réelles et imaginaires distinctes ; et
lesdits signaux de délai comprenant des composantes de délai cosinusoïdales et sinusoïdales distinctes d'un délai en fonction d'un angle de faisceau souhaité auquel lesdits transducteurs doivent être concentrés ;
chacun desdits signaux de canal retardés comprenant des représentations de composantes réelles et imaginaires distinctes.

5. Procédé selon la revendication 4, comprenant en outre l'étape consistant à recevoir lesdits signaux de canal.

6. Procédé selon la revendication 4, comprenant en outre l'étape consistant à produire lesdits signaux de canal.

7. Procédé selon la revendication 6, dans lequel l'étape consistant à produire lesdits signaux de canal comprend l'étape consistant à produire des représentations de domaine de fréquence de représentations échantillonnées dans le temps respectives de signaux respectifs reçus à des transducteurs respectifs et l'étape consistant à produire des représentations de domaine de temps desdits signaux respectifs en réponse aux dites représentations de domaine de fréquence, lesdites représentations de domaine de temps comprenant des composantes réelles et imaginaires.

8. Procédé selon la revendication 4, comprenant en outre l'étape consistant à recevoir lesdits signaux de délai.

9. Procédé selon la revendication 8, comprenant en outre l'étape consistant à recevoir lesdits signaux de canal et dans lequel lesdits signaux de délai sont reçus avant de recevoir lesdits signaux de canal.

10. Procédé selon la revendication 4, comprenant en outre l'étape consistant à produire lesdits signaux de délai.

11. Procédé selon la revendication 10, comprenant en outre l'étape consistant à recevoir lesdits signaux de canal et dans lequel lesdits signaux de délai sont produits avant de recevoir lesdits signaux de canal.

12. Procédé selon la revendication 10, dans lequel l'étape consistant à produire lesdits signaux de délai comprend l'étape consistant à produire lesdits signaux de délai en réponse à un espacement de transducteurs, une fréquence angulaire d'énergie ondulatoire reçue aux dits transducteurs, un angle de faisceau souhaité et une vitesse de ladite énergie ondulatoire dans une zone d'un support pour lequel l'image doit être produite.

13. Procédé selon la revendication 1, comprenant en outre l'étape consistant à produire un signal de faisceau composite normalisé comprenant une pluralité de valeurs normalisées, en réponse aux dites représentations de composantes réelles et imaginaires dudit signal de faisceau composite et, pour chacune desdites valeurs normalisées, l'étape consistant à calculer une partie réelle du produit du premier signal de faisceau et d'un conjugué complexe du deuxième signal de faisceau.

14. Procédé selon la revendication 13, dans lequel l'étape consistant à produire un signal de faisceau composite normalisé comprend l'étape consistant à mettre à l'échelle ladite partie réelle d'un produit du premier signal de faisceau et d'un conjugué complexe du deuxième signal de faisceau, par une valeur de grandeur.

15. Procédé selon la revendication 14, comprenant en outre l'étape consistant à produire ladite valeur de grandeur en réponse aux dites composantes réelles et imaginaires desdits premier et deuxième signaux de faisceau.

16. Procédé selon la revendication 1, dans lequel l'étape consistant à effectuer ladite expansion trigonométrique comprend l'étape consistant à effectuer une expansion de puissance sur chacune desdites valeurs normalisées.

17. Procédé selon la revendication 1, dans lequel l'étape consistant à effectuer ladite expansion trigonométrique comprend l'étape consistant à effectuer une somme de polynômes de Chebyshev sur chacune desdites valeurs normalisées.

18. Procédé selon la revendication 1, comprenant en outre l'étape consistant à illuminer des pixels sur l'affichage en réponse aux dits signaux d'illumination.

19. Procédé pour produire des signaux pour commander à un affichage de produire une image dans un système d'imagerie, le procédé comprenant l'étape consistant à effectuer le procédé selon la revendication 1 pour chacun d'une pluralité d'angles de faisceau pour produire un ensemble de signaux d'illumination pour chaque dit angle de faisceau.

20. Procédé selon la revendication 19, comprenant en outre l'étape consistant à définir ladite pluralité d'angles de faisceau.

21. Procédé selon la revendication 19, comprenant en outre l'étape consistant à cartographier des ensembles respectifs de valeurs d'illumination sur des rayons respectifs des pixels sur ledit affichage, chaque dit rayon correspondant à un angle de faisceau respectif, lesdits signaux d'illumination étant exploitables pour amener des pixels le long d'un rayon donné à être illuminés en réponse à des valeurs d'illumination correspondantes.

22. Support lisible par ordinateur codé avec des instructions pour ordonner à un processeur d'exécuter le procédé selon la revendication 1.

23. Signal lisible par ordinateur codé avec des instructions pour ordonner à un processeur d'exécuter le procédé selon la revendication 1.

24. Appareil pour produire des signaux pour commander à un affichage de produire une image dans un système d'imagerie employant une pluralité de transducteurs, l'appareil comprenant :

   des moyens pour produire des premier et deuxième signaux de faisceau en réponse à des signaux de canal retardés associés à des transducteurs, lesdits signaux de canal retardés représentant des composantes réelles et imaginaires des signaux de domaine de temps associés à des transducteurs respectifs retardés de manière appropriée pour concentrer un motif de faisceau de réception des transducteurs à un angle de faisceau, chacun desdits premier et deuxième signaux de faisceau comprenant des représentations de composantes réelles et imaginaires distinctes ;
   des moyens pour combiner lesdites représentations de composantes réelles et imaginaires desdits premier et deuxième signaux de faisceau pour produire un signal de faisceau composite, ledit signal de faisceau composite comprenant des représentations de composantes réelles et imaginaires distinctes ;
   des moyens pour effectuer une expansion trigonométrique sur des valeurs normalisées desdites représentations de composantes réelles et imaginaires dudit signal de faisceau composite pour produire une pluralité de valeurs étendues ; et
   des moyens pour produire des signaux d'illumination, en réponse aux dites valeurs étendues, lesdits signaux d'illumination étant exploitables pour être reçus par ledit affichage pour illuminer des pixels sur l'affichage.

25. Appareil selon la revendication 24, comprenant en outre des moyens pour recevoir lesdits signaux de canal retardés.

26. Appareil selon la revendication 24, comprenant en outre des moyens pour produire lesdits signaux de canal retardés.

27. Appareil selon la revendication 26, dans lequel lesdits moyens pour produire lesdits signaux de canal retardés comprennent des moyens pour produire lesdits signaux de canal retardés en réponse aux signaux de canal et aux signaux de délai associés aux dits transducteurs respectifs,
chaque signal de canal représentant un signal reçu à un transducteur correspondant et comprenant des représentations de composantes réelles et imaginaires distinctes ; et
lesdits signaux de délai comprenant des composantes de délai cosinusoïdales et sinusoïdales distinctes d'un délai en fonction d'un angle de faisceau souhaité auquel lesdits transducteurs doivent être concentrés ;

chacun desdits signaux de canal retardés comprenant des représentations de composantes réelles et imaginaires distinctes.

28. Appareil selon la revendication 27, comprenant en outre des moyens pour recevoir lesdits signaux de canal.

29. Appareil selon la revendication 27, comprenant en outre des moyens pour produire lesdits signaux de canal.

30. Appareil selon la revendication 29, dans lequel lesdits moyens pour produire lesdits signaux de canal comprennent :

   des moyens pour produire des représentations de domaine de fréquence de représentations échantillonnées dans le temps respectives de signaux respectifs reçus à des transducteurs respectifs ; et
   des moyens pour produire des représentations de domaine de temps desdits signaux respectifs en réponse aux dites représentations de domaine de fréquence,
   lesdites représentations de domaine de temps comprenant des représentations de composantes réelles et imaginaires.

31. Appareil selon la revendication 27, comprenant en outre des moyens pour recevoir lesdits signaux de délai.

32. Appareil selon la revendication 31, comprenant en outre des moyens pour recevoir lesdits signaux de canal et dans lequel lesdits signaux de délai sont reçus avant de recevoir lesdits signaux de canal.

33. Appareil selon la revendication 27, comprenant en outre des moyens pour produire lesdits signaux de délai.

34. Appareil selon la revendication 33, comprenant en outre des moyens pour recevoir lesdits signaux de canal et dans lequel lesdits signaux de délai sont produits avant de recevoir lesdits signaux de canal.

35. Appareil selon la revendication 33, dans lequel lesdits moyens pour produire lesdits signaux de délai comprennent des moyens pour produire lesdits signaux de délai en réponse à un espacement de transducteurs, une fréquence angulaire d'énergie ondulatoire reçue aux dits transducteurs, un angle de faisceau souhaité et une vitesse de ladite énergie ondulatoire dans une zone d'un support pour lequel l'image doit être produite.

36. Appareil selon la revendication 24, comprenant en outre des moyens pour produire un signal de faisceau composite normalisé comprenant une pluralité de valeurs normalisées, en réponse aux dites représentations de composantes réelles et imaginaires dudit signal de faisceau composite, dans lequel lesdits moyens pour produire un signal de faisceau composite normalisé comprennent des moyens pour, pour chacune desdites valeurs normalisées, calculer une partie réelle du produit du premier signal de faisceau et d'un conjugué complexe du deuxième signal de faisceau.

37. Appareil selon la revendication 36, dans lequel lesdits moyens de normalisation comprennent des moyens pour mettre à l'échelle ladite partie réelle d'un produit du premier signal de faisceau et d'un conjugué complexe du deuxième signal de faisceau, par une valeur de grandeur.

38. Appareil selon la revendication 37, comprenant en outre des moyens pour produire ladite valeur de grandeur en réponse aux dites composantes réelles et imaginaires desdits premier et deuxième signaux de faisceau.

39. Appareil selon la revendication 24, dans lequel lesdits moyens pour effectuer ladite expansion trigonométrique comprennent des moyens pour effectuer une expansion de puissance sur chacune desdites valeurs normalisées.

40. Appareil selon la revendication 24, dans lequel lesdits moyens pour effectuer ladite expansion trigonométrique comprennent des moyens pour effectuer une somme de polynômes de Chebyshev sur chacune desdites valeurs normalisées.

41. Appareil selon la revendication 24, comprenant des moyens pour illuminer des pixels sur l'affichage en réponse aux dites valeurs étendues.

42. Appareil selon la revendication 24, comprenant en outre des moyens pour amener ledit appareil à produire un ensemble de signaux d'illumination pour une pluralité d'angles de faisceau.

43. Appareil selon la revendication 42, comprenant en outre des moyens pour définir ladite pluralité d'angles de faisceau.

**44.** Appareil selon la revendication 42, comprenant en outre des moyens pour cartographier des ensembles respectifs de valeurs d'illumination sur des rayons respectifs des pixels sur ledit affichage, chaque dit rayon correspondant à un angle de faisceau respectif, lesdits signaux d'illumination étant exploitables pour amener des pixels le long d'un rayon donné à être illuminés en réponse à des valeurs d'illumination correspondantes.

**45.** Appareil selon la revendication 24, comprenant :

une mémoire pour stocker des signaux associés à des transducteurs respectifs ; et
dans lequel lesdits moyens pour produire, lesdits moyens pour combiner et lesdites moyens pour effectuer sont mis en oeuvre dans un processeur en communication avec ladite mémoire.

**46.** Appareil selon la revendication 45, comprenant en outre une entrée couplée de manière opérationnelle au dit processeur pour recevoir lesdits signaux de canal retardés.

**FIG. 1**

TRANSDUCER ELEMENTS

PRE-AMP & TVG AMP 54

SIGNAL MIXERS 58

LOW PASS FILTERS 60

A

51

B

49

TVG D/A

TO P.C. 33

64

UART OR ETHERNET NIC 32

TWO CHANNEL ADC

66

PARALLEL BUS

DSP 30

EPROM WITH DSP PROGRAM 31

50

12

TRANSMIT XDUCER 34

TRANSMIT AMP 36

56

LOW PASS AND SAMPLING FREQ. NCO 62

TRANSMIT AND MIXING FREQ. NCO 38

**FIG. 2**

EP 1 774 360 B1

**FIG. 3**

| DEPTH RANGE | DELTA FREQUENCY | REFERENCE FREQUENCY | SAMPLING FREQUENCY | CUTOFF FREQUENCY | PING LENGTH |
|---|---|---|---|---|---|
| 5 m | 30.46875 kHz | 350.46875 kHz | 75.0 kHz | 34.0 kHz | 30 µSec |
| 10 m | 15.234 kHz | 335.234 kHz | 37.5 kHz | 17.0 kHz | 60 µSec |
| 40 m | 3.80859 kHz | 323.80859 kHz | 9.375 kHz | 4.25 kHz | 240 µSec |
| 100 m | 1.5234 kHz | 321.5234 kHz | 3.75 kHz | 1.7 kHz | 600 µSec |

**FIG. 4**

FIG. 5

─72

```
        ┌──────────┐
        │   CPU    │
        │    74    │
        └──────────┘
             │
  ┌──────────────┐      ┌──────────────────┐
  │ PROGRAM      │      │ RANDOM ACCESS    │
  │ MEMORY       │──────│ MEMORY           │
  │ 76           │      │ 78               │
  └──────────────┘      └──────────────────┘
             │
      ┌──────────────┐        ┌──────────────┐
      │ INPUT        │        │ OUTPUT       │
      │ INTERFACE    │        │ INTERFACE    │
      │ 80           │        │ 82           │
      └──────────────┘        └──────────────┘
┌──────────────┐   ┌──────────────┐
│ USER INPUT   │   │ COMM         │
│ DEVICE       │───│ INTERFACE    │
│ 84           │   │ 86           │
└──────────────┘   └──────────────┘
                                   ┌──────────────┐
   ┌──────────┐  ┌──────────┐      │ DISPLAY      │
   │ NETWORK  │  │ MEDIA    │      │ 16           │
   │ DEVICE   │  │ READER   │      └──────────────┘
   │ 88       │  │ 90       │
   └──────────┘  └──────────┘
```

TO SONAR
TRANSDUCER UNIT
12

# FIG. 6

200

| PRODUCE FIRST AND SECOND BEAM SIGNALS | 202 |

↓

| COMBINE THE FIRST AND SECOND BEAM SIGNALS TO PRODUCE A COMPOSITE BEAM SIGNAL | 204 |

↓

| PERFORM A TRIGONOMETRIC EXPANSION ON NORMALIZED VALUES OF THE COMPOSITE BEAM SIGNAL TO PRODUCE EXPANDED COMPOSITE VALUES | 206 |

↓

| PRODUCE ILLUMINATION SIGNALS IN RESPONSE TO EXPANDED COMPOSITE VALUES | 208 |

# FIG. 7

100

```
┌─────────────────────────────┐
│       INITIALIZATION        │── 96
└─────────────────────────────┘
              │
              ▼
┌─────────────────────────────┐
│    CALCULATE FIELD OF VIEW   │── 98
└─────────────────────────────┘
              │
              ▼
┌─────────────────────────────┐
│  CALCULATE RADIANS PER SAMPLE │── 99
└─────────────────────────────┘
              │
              ▼
┌─────────────────────────────┐
│     DEFINE BEAM ANGLES AND   │──102
│     PRODUCE DELAY SIGNALS    │
└─────────────────────────────┘
              │
              ▼
┌─────────────────────────────┐
│   ACQUIRE TIME SAMPLES FROM  │──104
│        TRANSDUCERS           │
└─────────────────────────────┘
              │
              ▼
┌─────────────────────────────┐
│     PRODUCE CHANNEL SIGNALS  │──106
│          FFT / IFT           │
└─────────────────────────────┘
              │
              ▼
┌─────────────────────────────┐
│   PRODUCE DELAYED CHANNEL    │──108
│  SIGNALS FOR EACH BEAM ANGLE │
└─────────────────────────────┘
              │
              ▼
┌─────────────────────────────┐
│   COMBINE DELAYED CHANNEL TO │
│    PRODUCE FIRST AND SECOND  │──110
│   BEAM SIGNALS FOR EACH BEAM │
│            ANGLE             │
└─────────────────────────────┘
              │
              ▼
┌─────────────────────────────┐
│   COMBINE FIRST AND SECOND   │
│  BEAM SIGNALS FOR EACH BEAM  │──111
│            ANGLE             │
└─────────────────────────────┘
              │
              ▼
┌─────────────────────────────┐
│          NORMALIZE           │──112
└─────────────────────────────┘
              │
              ▼
┌─────────────────────────────┐
│    TRIGONOMETRIC EXPANSION   │──114
└─────────────────────────────┘
              │
              ▼
┌─────────────────────────────┐
│   SCALE TO PRODUCE AMPLITUDE │──116
│   VALUES FOR EACH BEAM ANGLE │
└─────────────────────────────┘
              │
              ▼
┌─────────────────────────────┐
│    MAP AMPLITUDE VALUES TO   │──118
│    CORRESPONDING PIXELS      │
└─────────────────────────────┘
```

# FIG. 8

PRE CALCULATE *STr* ANGLE FOR EACH TRANSDUCER ELEMENT

θ = k

θ = 2

θ = 1

$$STr = \frac{mdwSin\theta}{C}$$

120

FIND *Cos* + *Sin* VALUES OF *STr* FOR EACH BEAM ANGLE

122

θ = k

θ = 2

θ = 1

124

| *Cos(STr)* | *Sin(STr)* |
|---|---|

# FIG. 9

**FIG. 10A**

COMBINE BEAM SIGNALS TO PRODUCE
COMPOSITE BEAM SIGNAL — 111

$\theta k$
$\theta 2$
$\theta 1$
$\mu_1$
$\mu_2$
$\vdots$
$\mu_n$

138

NORMALIZE — 112

$\theta k$
$\theta 2$
$\theta 1$
$\tau_1$
$\tau_2$
$\vdots$
$\tau_n$

140

TRIGONOMETRIC EXPANSION — 114

$\theta k$
$\theta 2$
$\theta 1$
$\Sigma_1$
$\Sigma_2$
$\vdots$
$\Sigma_n$

142

PRODUCE SCALED AMPLITUDE VALUES — 116

$\theta k$
$\theta 2$
$\theta 1$
$\Psi_1$
$\Psi_2$
$\vdots$
$\Psi_n$

**FIG. 10B**

**FIG. 11**

FIG. 12

EP 1 774 360 B1